(19) Europäisches Patentamt / European Patent Office / Office européen des brevets

(11) **EP 4 390 763 A1**

(12) **EUROPEAN PATENT APPLICATION**

(43) Date of publication:
**26.06.2024 Bulletin 2024/26**

(21) Application number: **23212566.6**

(22) Date of filing: **28.11.2023**

(51) International Patent Classification (IPC):
*G06N 3/043* (2023.01)    *G06N 3/096* (2023.01)
*G06N 3/045* (2023.01)    *G06N 3/0464* (2023.01)
*G06N 3/048* (2023.01)    *G06N 3/0895* (2023.01)
*G06N 3/09* (2023.01)    *G06V 10/44* (2022.01)
*G06V 10/764* (2022.01)    *G06V 10/82* (2022.01)

(52) Cooperative Patent Classification (CPC):
**G06N 3/043; G06N 3/045; G06N 3/0464;
G06N 3/048; G06N 3/0895; G06N 3/09;
G06N 3/096; G06V 10/454; G06V 10/764;
G06V 10/82**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **06.12.2022 IN 202221070260**

(71) Applicant: **Tata Consultancy Services Limited
Maharashtra (IN)**

(72) Inventors:
• **GUBBI LAKSHMINARASIMHA, Jayavardhana
Rama**
**560069 Bangalore, Karnataka (IN)**

• **SINGH, Mohana**
**560069 Bangalore, Karnataka (IN)**
• **PAL, Arpan**
**700160 Kolkata, Kolkata (IN)**
• **KATHIRVEL, Ram Prabhakar**
**560069 Bangalore, Karnataka (IN)**
• **PAMULAKANTY SUDARSHAN, Viswanath**
**560069 Bangalore, Karnataka (IN)**

(74) Representative: **Goddar, Heinz J. et al
Boehmert & Boehmert
Anwaltspartnerschaft mbB
Pettenkoferstrasse 22
80336 München (DE)**

(54) **METHODS AND SYSTEMS FOR TASK ADAPTATION USING FUZZY DEEP LEARNING ARCHITECTURE**

(57) The present disclosure provides methods and systems for task adaptation using fuzzy deep learning architecture. In the present disclosure, a low-shot approach for knee injury classification is proposed along with a deep learning architecture utilizing a fuzzy layer. For the low-shot approach, a stage of knowledge transfer takes place from a first classification task (source task) to a second classification task (target task) through a task adaptation approach. The first classification task and the second classification task are two related diagnoses of the knee, where sufficient labeled samples are available for first classification task but very few labeled samples are available for the second classification task. Further, the trained fuzzy deep learning architecture is used to generate pseudo-labels for a collection of unlabeled samples available for and the second classification task. Then, multiple stages of fine-tuning are carried out which help in substantially improving the classification performance.

FIG. 5

**Description**

CROSS-REFERENCE TO RELATED APPLICATIONS AND PRIORITY

The present application claims priority to Indian application no. 202221070260, filed on December 6, 2022.

TECHNICAL FIELD

The embodiments herein generally relate to deep learning (DL) and, more particularly, to methods and systems for task adaptation using fuzzy deep learning architecture.

BACKGROUND

With emergence and application of intelligent automation in various applications in various industries, machine learning has become an integral part of multiple domains including healthcare, business, and retail. Image classification is one of the primary tasks in visual domain and can be performed using machine learning models, deep learning models, and /or the like. However, despite major breakthroughs in machine vision capabilities, there are still a number of challenges. Deep learning based models for image classification are data hungry and require a huge amount of data to achieve benchmark performance. However, in many real world applications such as medical imaging there is a limited availability of data, and labeled data. For example, Magnetic Resonance Imaging (MRI) has a long-standing acceptance as a de facto technology for obtaining high-resolution three-dimensional images of soft tissue pathologies of knee. However, volume and amount of information in MRI sequences warrant a need for automated interpretations that can assist radiologists in making faster and more consistent diagnoses. Despite popularity of deep learning in achieving this goal, it is limited by dependency on large amounts of data. Hence, existing deep learning models fail to perform well in such scenarios.

Existing deep learning models follow a supervised classification approach requiring labeled data which can be costly and time-intensive to acquire. Thus, classification of images and more specifically medical images in low-data settings is challenging. Hence, there is a need for approaching the problem of image classification from a data-efficiency perspective. Further, solutions for multi-view images need to be developed where most existing solutions are targeted towards conventional two-dimensional 2D images.

SUMMARY

Embodiments of the present disclosure present technological improvements as solutions to one or more of the above-mentioned technical problems recognized by the inventors in conventional systems.

For example, in one embodiment, a processor implemented method is provided. The processor implemented method comprising receiving, via one or more hardware processors, a first dataset and a second dataset comprising a plurality of three-dimensional images, wherein the plurality of three-dimensional images comprise a plurality of slices and a plurality of modalities, and wherein the first dataset comprises a set of labeled multi-sliced and multi-modal samples of plurality of three-dimensional images related to a first classification task and the second dataset comprises (i) a set of labeled multi-sliced and multi-modal samples and (ii) a set of unlabeled multi-sliced and multi-modal samples related to a second classification task; inputting, via the one or more hardware processors, the first dataset to fuzzy deep learning architecture which is pretrained using the first dataset for the first classification task, wherein the fuzzy deep learning architecture comprises (i) a backbone comprising a plurality of convolutional blocks and (ii) a plurality of fuzzy layers, and (iii) a classification head comprising a plurality of average pooling layers followed by a plurality of fully connected layers and a plurality of max-pool layers, and wherein each of the plurality of fuzzy layers comprises an ordered weighted averaging (OWA) layer, a sorting function, and a weighted aggregation layer; and iteratively performing, via the one or more hardware processors, a plurality of steps until a stopping criterion is satisfied, the plurality of steps comprising: (i) training, the fuzzy deep learning architecture using the set of multi-sliced and multi-modal labeled samples in the second dataset; (ii) generating, a plurality of pseudo-labels for the set of multi-sliced and multi-modal unlabeled samples in the second dataset for the second classification task; (iii) filtering an optimum fraction of the set of unlabeled samples of the plurality of three-dimensional images in the second dataset for the second classification task based on a model confidence for the generated plurality of pseudo-labels; (iv) augmenting the optimum fraction of the set of unlabeled samples of the plurality of three-dimensional images in the second dataset for the second classification task with corresponding pseudo-labels from the plurality of pseudo-labels; (v) fine tuning the fuzzy deep learning architecture using (a) the set of labeled multi-sliced and multi-modal samples of the plurality of three-dimensional images in the second dataset and (b) the optimum fraction of the set of multi-sliced and multi-modal unlabeled samples of the plurality of three-dimensional images in the second dataset for the second classification task augmented with corresponding pseudo-labels from the plurality of pseudo-labels; (vi) generating, a plurality of pseudo-labels for a remaining set of multi-sliced and multi-modal unlabeled samples in the second dataset for the second classification task; and (vii) performing steps of training the fuzzy deep learning architecture till finetuning for the remaining set of multi-sliced and multi-modal unlabeled samples in the second dataset for the second classification task.

In another aspect, a system for is provided. The system comprises a memory storing instructions; one or more Input/Output (I/O) interfaces; and one or more hardware processors coupled to the memory via the one or more I/O interfaces, wherein the one or more hardware processors are configured by the instructions to receive, a first dataset and a second dataset comprising a plurality of three-dimensional images, wherein the plurality of three-dimensional images comprise a plurality of slices and a plurality of modalities, and wherein the first dataset comprises a set of labeled multi-sliced and multi-modal samples of plurality of three-dimensional images related to a first classification task and the second dataset comprises (i) a set of labeled multi-sliced and multi-modal samples and (ii) a set of unlabeled multi-sliced and multi-modal samples related to a second classification task; input, the first dataset to fuzzy deep learning architecture which is pretrained using the first dataset for the first classification task, wherein the fuzzy deep learning architecture comprises (i) a backbone comprising a plurality of convolutional blocks and (ii) a plurality of fuzzy layers, and (iii) a classification head comprising a plurality of average pooling layers followed by a plurality of fully connected layers and a plurality of max-pool layers, and wherein each of the plurality of fuzzy layers comprises an ordered weighted averaging (OWA) layer, a sorting function, and a weighted aggregation layer; and iteratively perform, a plurality of steps until a stopping criterion is satisfied, the plurality of steps comprising: (i) training, the fuzzy deep learning architecture using the set of multi-sliced and multi-modal labeled samples in the second dataset; (ii) generating, a plurality of pseudo-labels for the set of multi-sliced and multi-modal unlabeled samples in the second dataset for the second classification task; (iii) filtering an optimum fraction of the set of unlabeled samples of the plurality of three-dimensional images in the second dataset for the second classification task based on a model confidence for the generated plurality of pseudo-labels; (iv) augmenting the optimum fraction of the set of unlabeled samples of the plurality of three-dimensional images in the second dataset for the second classification task with corresponding pseudo-labels from the plurality of pseudo-labels; (v) fine tuning the fuzzy deep learning architecture using (a) the set of labeled multi-sliced and multi-modal samples of the plurality of three-dimensional images in the second dataset and (b) the optimum fraction of the set of multi-sliced and multi-modal unlabeled samples of the plurality of three-dimensional images in the second dataset for the second classification task augmented with corresponding pseudo-labels from the plurality of pseudo-labels; (vi) generating, a plurality of pseudo-labels for a remaining set of multi-sliced and multi-modal unlabeled samples in the second dataset for the second classification task; and (vii) performing steps of training the fuzzy deep learning architecture till finetuning for the remaining set of multi-sliced and multi-modal unlabeled samples in the second dataset for the second classification task.

In yet another aspect, there are provided one or more non-transitory machine-readable information storage mediums comprising one or more instructions, which when executed by one or more hardware processors causes a method for. The method includes receiving, a first dataset and a second dataset comprising a plurality of three-dimensional images, wherein the plurality of three-dimensional images comprise a plurality of slices and a plurality of modalities, and wherein the first dataset comprises a set of labeled multi-sliced and multi-modal samples of plurality of three-dimensional images related to a first classification task and the second dataset comprises (i) a set of labeled multi-sliced and multi-modal samples and (ii) a set of unlabeled multi-sliced and multi-modal samples related to a second classification task; inputting, the first dataset to fuzzy deep learning architecture which is pretrained using the first dataset for the first classification task, wherein the fuzzy deep learning architecture comprises (i) a backbone comprising a plurality of convolutional blocks and (ii) a plurality of fuzzy layers, and (iii) a classification head comprising a plurality of average pooling layers followed by a plurality of fully connected layers and a plurality of max-pool layers, and wherein each of the plurality of fuzzy layers comprises an ordered weighted averaging (OWA) layer, a sorting function, and a weighted aggregation layer; and iteratively performing, a plurality of steps until a stopping criterion is satisfied, the plurality of steps comprising: (i) training, the fuzzy deep learning architecture using the set of multi-sliced and multi-modal labeled samples in the second dataset; (ii) generating, a plurality of pseudo-labels for the set of multi-sliced and multi-modal unlabeled samples in the second dataset for the second classification task; (iii) filtering an optimum fraction of the set of unlabeled samples of the plurality of three-dimensional images in the second dataset for the second classification task based on a model confidence for the generated plurality of pseudo-labels; (iv) augmenting the optimum fraction of the set of unlabeled samples of the plurality of three-dimensional images in the second dataset for the second classification task with corresponding pseudo-labels from the plurality of pseudo-labels; (v) fine tuning the fuzzy deep learning architecture using (a) the set of labeled multi-sliced and multi-modal samples of the plurality of three-dimensional images in the second dataset and (b) the optimum fraction of the set of multi-sliced and multi-modal unlabeled samples of the plurality of three-dimensional images in the second dataset for the second classification task augmented with corresponding pseudo-labels from the plurality of pseudo-labels; (vi) generating, a plurality of pseudo-labels for a remaining set of multi-sliced and multi-modal unlabeled samples in the second dataset for the second classification task; and (vii) performing steps of training the fuzzy deep learning architecture till finetuning for the remaining set of multi-sliced and multi-modal unlabeled samples in the second dataset for the second classification task.

In accordance with an embodiment of the present disclosure, each of the plurality of convolutional blocks comprises a convolutional neural network (CNN) layer followed by rectified linear activation unit (ReLu), and a first, a second and a fourth convolutional block from the plurality of convolutional blocks comprises a max-pool layer with a down-sampling factor of 2.

In accordance with an embodiment of the present disclosure, the fuzzy deep learning architecture perform steps of: (i) obtaining a first subset of input features of each slice of the plurality of three-dimensional images for the first classification task from each intermediate convolutional block from the plurality of convolutional blocks; (ii) obtaining a set of input features of each slice of the plurality of three-dimensional images for the first classification task by up-sampling and adding the first subset of input features to a second subset of input features of each slice of the plurality of three-dimensional images for the first classification task obtained from a previous block; (iii) applying a corresponding feature from the set of input features of each slice of the plurality of three-dimensional images for the first classification task to each of the plurality of fuzzy layers; (iv) performing a max-pool operation across each of the set of input features of each of the plurality of slices of the plurality of three-dimensional images to obtain a set of max-pool input features; and (v) inputting the set of max-pool input features to a corresponding fully connected layer from a plurality of fully connected layers of the classification head followed by a sigmoid function to obtain a set of probabilities for each image from the plurality of three-dimensional image.

In accordance with an embodiment of the present disclosure, each of the plurality of fuzzy layers augments an incoming information to each corresponding feature in the set of input features, and wherein the incoming information is augmented by creating a set of input feature maps that are created by sorting a plurality of channels in descending order.

In accordance with an embodiment of the present disclosure, the plurality of fuzzy layers are one dimensional and two-dimensional based on type of a weighting vector.

In accordance with an embodiment of the present disclosure, the stopping criteria indicates a saturation in classification performance of the fuzzy deep learning architecture.

In accordance with an embodiment of the present disclosure, the trained fuzzy deep learning architecture is used to learn the one or more relevant features of the plurality of three-dimensional images for the second classification task in accordance with task adaption involving knowledge transfer from the first classification task to the second classification task.

It is to be understood that both the foregoing general description and the following detailed description are exemplary and explanatory only and are not restrictive of the invention, as claimed.

BRIEF DESCRIPTION OF THE DRAWINGS

The accompanying drawings, which are incorporated in and constitute a part of this disclosure, illustrate exemplary embodiments and, together with the description, serve to explain the disclosed principles:

FIG. 1 is a functional block diagram of a system for task adaptation using fuzzy deep learning architecture, in accordance with some embodiments of the present disclosure.

FIGS. 2A and 2B, with reference to FIG. 1, illustrate an exemplary flow diagram illustrating a method for task adaptation using fuzzy deep learning architecture, using the system 100 of FIG. 1 in accordance with some embodiments of the present disclosure.

FIG. 3 is a functional block diagram of the fuzzy deep learning architecture for one stream, in accordance with some embodiments of the present disclosure.

FIG. 4 is a functional block diagram of a fuzzy layer comprised in the fuzzy deep learning architecture, in accordance with some embodiments of the present disclosure.

FIG. 5 is a flow diagram illustrating the steps of combined usage of task adaptation and pseudo-label generation as a training regime using fuzzy deep learning architecture, in accordance with some embodiments of the present disclosure, in accordance with some embodiments of the present disclosure.

FIGS. 6A through 6I depict graphical representations illustrating a performance comparison of the method of present disclosure with baseline models in terms of Area Under the receiver operator characteristics Curve (AUC) across four stages of finetuning at each of the four $p$ values, in accordance with an embodiment of the present disclosure.

FIGS. 7A through 7L depict graphical representations illustrating performance comparison of the models in terms of AUC across four stages of finetuning for target task Meniscus and knowledge transferred from source task Abnormal, in accordance with an embodiment of the present disclosure.

FIGS. 8A through 8L depict graphical representations illustrating performance comparison of the models in terms of AUC across four stages of finetuning for target task ACL and knowledge transferred from source task Abnormal, in accordance with an embodiment of the present disclosure.

FIGS. 9A through 9L depict graphical representations illustrating performance comparison of the models in terms of AUC across four stages of finetuning for target task Meniscus and knowledge transferred from source task ACL, in accordance with an embodiment of the present disclosure.

It should be appreciated by those skilled in the art that any block diagrams herein represent conceptual views of illustrative systems and devices embodying the principles of the present subject matter. Similarly, it will be appreciated that any flow charts, flow diagrams, and the like represent various processes which may be substantially represented in computer readable medium and so executed by a computer or processor, whether or not such computer or processor is explicitly shown.

DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

Image classification is one of the primary tasks in visual domain. One application of image classification is in medical domain for disease classification such as knee injury classification. Knees are one of the most susceptible body regions to injuries. Diagnosis of knee ligamentous injuries and meniscal injuries is incredibly complex and relies on clinical examination and differential diagnosis. Historically, meniscal injuries have been diagnosed clinically with simple signs like joint line tenderness, McMurray's test, and the grinding test of Apley. These however cannot diagnose the location or extent of tear accurately. Further complexities arise when multiple injuries co-exist, since Anterior Cruciate Ligament (ACL) tears and meniscal tears are often found together and one may be missed in a clinical examination by inexperienced doctors. The presence of bone bruising, bone edema and local swelling, all make the diagnosis even more difficult. This comes with antecedent risk of an unnecessary or ill-timed surgical procedure with poor outcomes. Magnetic Resonance Imaging (MRI) has been revolutionary in not only allowing accurate detection of tears of various ligaments and menisci but also in understanding when to perform surgical procedures for optimal results. Though, one may rely on a sagittal or coronal MRI alone for looking at menisci and cruciate, a truly comprehensive analysis involves looking at all the various sequences including specialized sequences designed to delineate these structures better. This requires time and patience and is prone to human error in interpretation and provides a fertile ground for laying down efficient algorithms to ease interpretation of voluminous data on a day-to-day basis.

Being universal approximators, Deep Neural Networks (DNNs) can model the complex relationship between MRI scans and their interpretations. As such, there has been growing interest in the biomedical community towards leveraging deep learning models' capacity, which in many cases has resulted in outperforming traditional medical image analysis methods. Recently, in a state-of-the-art-work (e.g., refer 'Nicholas Bien, Pranav Rajpurkar, Robyn L Ball, Jeremy Irvin, Allison Park, Erik Jones, Michael Bereket, Bhavik N Patel, Kristen W Yeom, Katie Shpanskaya, et al. 2018. Deep-learning assisted diagnosis for knee magnetic resonance imaging: development and retrospective validation of MRNet. PLoS medicine 15, 11 (2018), e1002699. '), a Knee Injury MRI dataset along with a CNN-based model (MRNet) was released that gave rise to efforts toward deep-learning-based knee injury detection based on a transfer learning approach. The Knee Injury MRI dataset consists of multi-slice and multi-modal samples for each patient instance. In the Knee Injury MRI dataset, labels are available for ACL tear, Meniscal tear, and general abnormalities, while each sample instance is available in three modalities (with each modality in a different planar view). Number of slices varies across the modalities as well as each sample instance. To deal with irregular number of slices, the MRNet model consists of an AlexNet-based feature extractor, which is applied to each slice of input three dimensional (3D) scan to obtain corresponding latent representations. Pooling is then applied across the latent representations to obtain a single vector, which then passes through a classification head to produce class probabilities. Further, logistic regression is applied across the modalities to obtain an overall classification score for each of the three classes. In contrast to transfer learning approach, an Efficiently-Layered Network (ELNet), a light-weight model trained from scratch is proposed in another state-of-the-art. The ELNet model uses residual connections, multi-slice normalization, and blur pooling, and results are reported for ACL and Meniscal tear classes. Also, there exists an approach where MRNet as well as ELNet are used as backbone architectures where intermediate features are acted on by a Feature Pyramid Network to detect small-scale features and a Pyramid Detail Pooling framework which operates at multiple scales. Again, they report results on ACL and Meniscal tears.

Despite its increasing popularity, deep learning models are accompanied by limitations due to dependence on availability of sufficiently large amounts of labeled data. Further, compared with other domains, some of the main challenges with medical image datasets is lack of sufficient samples and corresponding expert annotations. Generally, only affected persons showing symptoms go in for a diagnosis, causing a limitation in data source as well as representativeness of collected data. Apart from this, annotating medical image data is time and labor-intensive and requires expert domain knowledge. Hence, these limitations motivate exploring deep learning models for medical image data from a data-efficiency perspective.

In traditional supervised learning, there exists pairs of data samples and corresponding ground truth labels. Deep models are then trained using a loss function to predict labels, with an appropriate penalty as loss between the prediction and ground truth labels. In semi-supervised learning, the deep models also take advantage of lower quality data devoid of ground truth labels to learn better representations of input. A simple method based on pseudo-labels is proposed in a traditional approach where unlabeled data is used in a supervised fashion by selecting a class with highest probability as the label for the originally unlabeled input. It is shown that the traditional approach encourages a low-density separation between classes. This method differs from most other unsupervised learning methods in not requiring an unsupervised pretraining stage. Further, as an alternative to traditional supervised learning methods for natural images, few-shot learning could be used. In such learning settings, the aim is to learn representations that generalize and perform well on novel classes given only a few labeled samples. This mimics real-world scenarios where only a scarce amount of labeled medical image data is accessible.

Another area of growing interest is integration of fuzzy methodologies with deep learning models. Such soft computing components empower the deep learning models with ability to model complex and uncertain events. One such fuzzy methodology includes aggregation functions, which have usually been used on top of the deep learning models as an approach to fuse information from multiple models. In a state-of-the-art approach (e.g., refer 'Stanton R Price, Steven R Price, and Derek T Anderson. 2019. Introducing fuzzy layers for deep learning. In 2019 IEEE International Conference on Fuzzy Systems (FUZZ-IEEE). IEEE, 1-6. '), Ordered Weighted Averaging (OWA) operators are used as aggregating functions guided by linguistic quantifiers in complex multi-criteria decision systems. The Ordered Weighted Averaging (OWA) operators are a family of aggregating functions, which associate weights with ordered positions instead of hand tuning. In another state-of-the-art-work (e.g., refer 'Sachin Ravi and Hugo Larochelle. 2017. Optimization as a model for few-shot learning. In International conference on learning representations.*) as provided in equation (1) below, an OWA operator of dimension n is defined as a mapping $\mathcal{F}: \mathcal{R}^n \to \mathcal{R}$ , which has associated with it a weighting vector $W = [w_1, w_2, w_n]$ such that,

$$S.1 \quad w_i \in (0,1), \forall i = 1,2,\dots,n$$

$$\quad \quad \quad \quad \quad \quad \quad (1)$$

$$S.2 \quad \sum_{i=1}^{n} w_i = 1$$

and where,

$$\mathcal{F}(a_1, a_2, \ldots, a_n) = \sum_{i=1}^{n} w_i b_i$$

Here, $b_i$ is the $i^{th}$ largest element in the collection $a_1, a_2, \ldots, a_n$. Recently, in a state-of-the-art-work (e.g., refer 'Ronald R Yager. 1988. On ordered weighted averaging aggregation operators in multicriteria decisionmaking. IEEE Transactions on systems, Man, and Cybernetics 18, 1 (1988), 183-190. '), these operators are introduced to deep learning models in the form of 'Fuzzy Layers' that can be incorporated in the intermediate or hidden layers. The feature maps from previous layers are sorted using channel metrics and passed on to these fuzzy layers where six fixed OWA operations are used to fuse the feature maps and create corresponding new maps. This collection of six new feature maps is then passed to the next layer. An extension of the previous state-of-the-art-work (e.g., refer 'Ronald R Yager. 1988. On ordered weighted averaging aggregation operators in multicriteria decisionmaking. IEEE Transactions on systems, Man, and Cybernetics 18, 1 (1988), 183-190. '), is found in another state-of-the-art-work (e.g., refer 'Ronald R Yager. 1993. Families of OWA operators. Fuzzy sets and systems 59, 2 (1993), 125-148. ') by allowing weight vectors $W$ to be learned by the network instead of being fixed and augmenting new feature maps to input feature maps instead of completely replacing them. Considering highly complex system of medical image analysis and diagnosis, there is motivation to explore benefits of fuzzy methodologies in deep-learning-based approaches.

The present disclosure addresses unresolved problems of the conventional methods by using an architecture learning features appropriate for knee injury classification by formulating it as a task adaptation problem in a low shot regime. In the present disclosure, a multi-stage approach is provided for improving results in a low-shot setting scenario where a second task being attempted has very few labeled data samples.

Embodiments of the present disclosure provide methods and systems for task adaptation using fuzzy deep learning architecture. In present disclosure, a low-shot approach for knee injury classification is disclosed along with a model utilizing a fuzzy layer. For the low-shot approach, a stage of knowledge transfer takes place from a 'source' task to a 'target' task through a task adaptation approach. Here, the source task and target task are two related diagnoses of the knee, where sufficient labeled samples are available for the source task but very few labeled samples are available for the target task. Further, the trained model is used to generate pseudo-labels for a collection of unlabeled samples available for the target task. Then, multiple stages of finetuning are carried out which help in improving classification performance substantially. The method of present disclosure is simple and model-agnostic and can be applied to any deep learning model. Apart from comparison with existing baselines, a model architecture is disclosed that utilizes fuzzy layers which help the model architecture to focus on small and localized regions of knee injury in input MRI scans. More Specifically, the present disclosure describes the following:

1. Knee injury classification from a scarce data and task adaptation perspective. To deal with scarce labeled data scenarios for a task, a task adaptation stage is disclosed where knowledge is transferred from a model trained for a different but related task.

2. A multi-stage fine-tuning step to exploit potential of unlabeled samples available for the target task. This is achieved by using trained models of previous steps to generate pseudo-labels for unlabeled data samples.

3. A fuzzy layer that exploits potential of soft computing methodologies missing in deep learning architecture. These layers help learn features that baseline models are not able to learn and focus on the small, localized regions of injury.

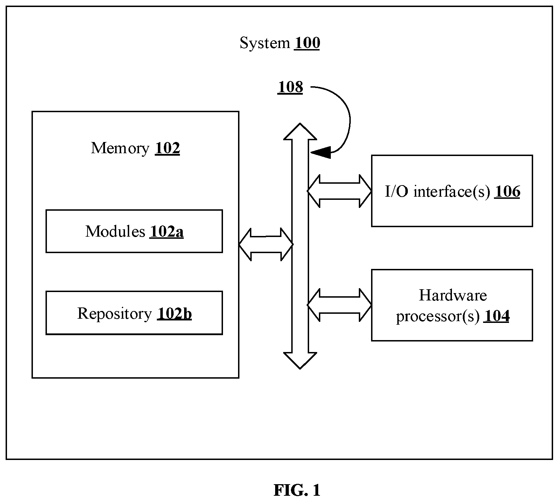

Referring now to the drawings, and more particularly to FIGS. 1 through 9L, where similar reference characters denote corresponding features consistently throughout the figures, there are shown preferred embodiments and these embodiments are described in the context of the following exemplary system and/or method.

FIG. 1 is a functional block diagram of a system 100 for task adaptation using fuzzy deep learning architecture, in accordance with some embodiments of the present disclosure. In an embodiment, the system 100 includes or is otherwise in communication with one or more hardware processors 104, communication interface device(s) or input/output (I/O) interface(s) 106, and one or more data storage devices or memory 102 operatively coupled to the one or more hardware processors 104. The one or more hardware processors 104, the memory 102, and the I/O interface(s) 106 may be coupled to a system bus 108 or a similar mechanism.

The I/O interface(s) 106 may include a variety of software and hardware interfaces, for example, a web interface, a graphical user interface, and the like. The I/O interface(s) 106 may include a variety of software and hardware interfaces, for example, interfaces for peripheral device(s), such as a keyboard, a mouse, an external memory, a plurality of sensor devices, a printer and the like. Further, the I/O interface(s) 106 may enable the system 100 to communicate with other devices, such as web servers and external databases.

The I/O interface(s) 106 can facilitate multiple communications within a wide variety of networks and protocol types, including wired networks, for example, local area network (LAN), cable, etc., and wireless networks, such as Wireless LAN (WLAN), cellular, or satellite. For the purpose, the I/O interface(s) 106 may include one or more ports for connecting a number of computing systems with one another or to another server computer. Further, the I/O interface(s) 106 may include one or more ports for connecting a number of devices to one another or to another server.

The one or more hardware processors 104 may be implemented as one or more microprocessors, microcomputers, microcontrollers, digital signal processors, central processing units, state machines, logic circuitries, and/or any devices that manipulate signals based on operational instructions. Among other capabilities, the one or more hardware processors 104 are configured to fetch and execute computer-readable instructions stored in the memory 102. In the context of the present disclosure, the expressions 'processors' and 'hardware processors' may be used interchangeably. In an embodiment, the system 100 can be implemented in a variety of computing systems, such as laptop computers, portable computer, notebooks, hand-held devices, workstations, mainframe computers, servers, a network cloud and the like.

The memory 102 may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes. In an embodiment, the memory 102 includes a plurality of modules 102a and a repository 102b for storing data processed, received, and generated by one or more of the plurality of modules 102a. The plurality of modules 102a may include routines, programs, objects, components, data structures, and so on, which perform particular tasks or implement particular abstract data types.

The plurality of modules 102a may include programs or computer-readable instructions or coded instructions that supplement applications or functions performed by the system 100. The plurality of modules 102a may also be used as, signal processor(s), state machine(s), logic circuitries, and/or any other device or component that manipulates signals based on operational instructions. Further, the plurality of modules 102a can be used by hardware, by computer-readable instructions executed by the one or more hardware processors 104, or by a combination thereof. In an embodiment, the plurality of modules 102a can include various sub-modules (not shown in FIG. 1). Further, the memory 102 may include information pertaining to input(s)/output(s) of each step performed by the processor(s) 104 of the system 100 and methods of the present disclosure.

The repository 102b may include a database or a data engine. Further, the repository 102b amongst other things, may serve as a database or includes a plurality of databases for storing the data that is processed, received, or generated as a result of the execution of the plurality of modules 102a. Although the repository 102b is shown internal to the system 100, it will be noted that, in alternate embodiments, the repository 102b can also be implemented external to the system 100, where the repository 102b may be stored within an external database (not shown in FIG. 1) communicatively coupled to the system 100. The data contained within such external database may be periodically updated. For example, new data may be added into the external database and/or existing data may be modified and/or non-useful data may be deleted from the external database. In one example, the data may be stored in an external system, such as a Lightweight Directory Access Protocol (LDAP) directory and a Relational Database Management System (RDBMS). In another embodiment, the data stored in the repository 102b may be distributed between the system 100 and the external database.

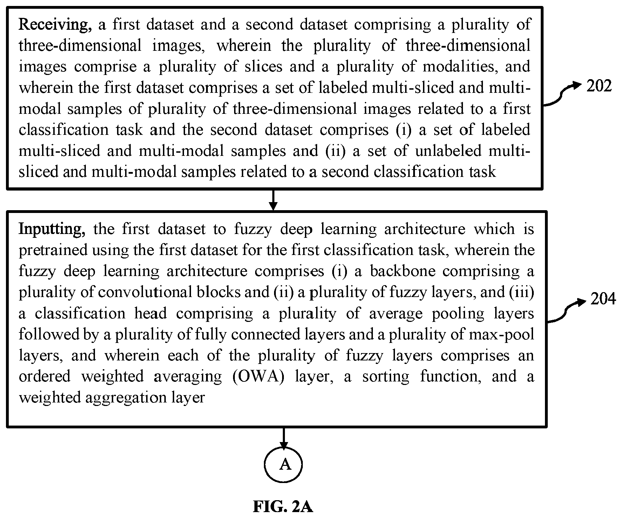

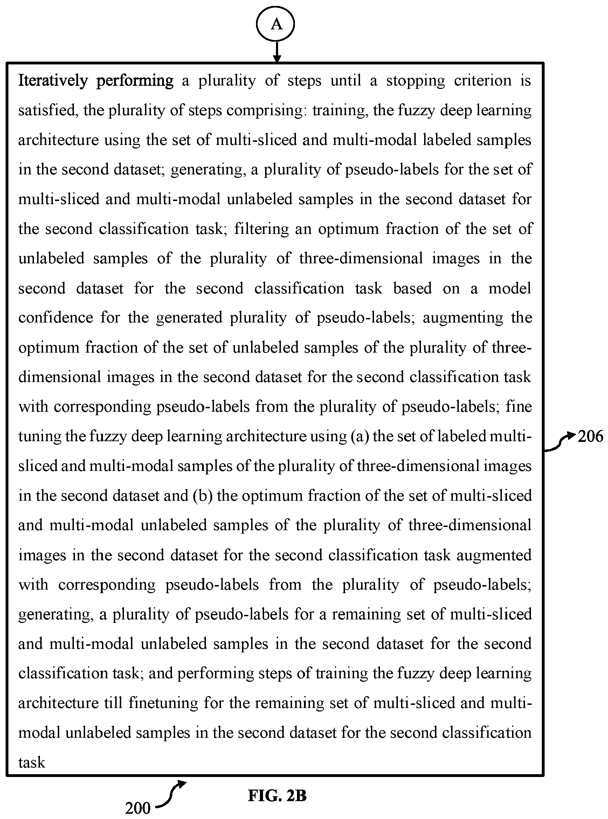

FIGS. 2A and 2B, with reference to FIG. 1, illustrate an exemplary flow diagram illustrating a method 200 for task adaptation using fuzzy deep learning architecture, using the system 100 of FIG. 1 in accordance with some embodiments of the present disclosure.

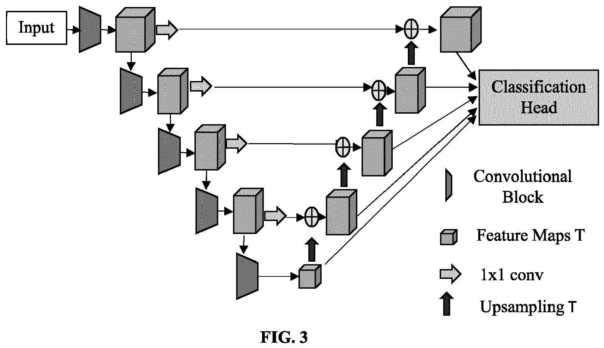

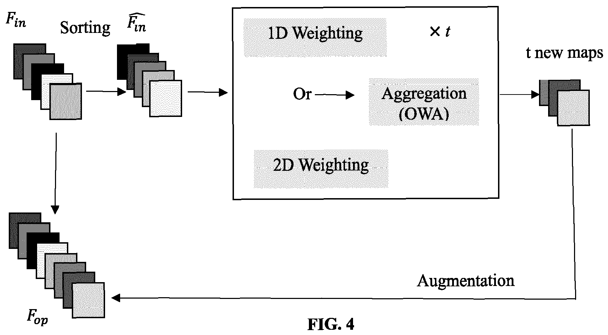

Referring to FIGS. 2A and 2B, in an embodiment, the system(s) 100 comprises one or more data storage devices or the memory 102 operatively coupled to the one or more hardware processors 104 and is configured to store instructions for execution of steps of the method by the one or more processors 104. The steps of the method 200 of the present disclosure will now be explained with reference to components of the system 100 of FIG. 1, the flow diagram as depicted in FIGS. 2A and 2B, the block diagram of FIG. 3, the block diagram of FIG. 4, and one or more examples. Although steps of the method 200 including process steps, method steps, techniques or the like may be described in a sequential order, such processes, methods and techniques may be configured to work in alternate orders. In other words, any sequence or order of steps that may be described does not necessarily indicate a requirement that the steps be performed in that order. The steps of processes described herein may be performed in any practical order. Further, some steps may be performed simultaneously, or some steps may be performed alone or independently.

In an embodiment, at step 202 of the present disclosure of FIG. 2A, the one or more hardware processors 104 are configured to receive a first dataset and a second dataset comprising a plurality of three-dimensional images. The plurality of three-dimensional images could be from any domain including but not limited to healthcare, retail, insurance, and/or the like. However, in the context of the present disclosure, the plurality of three-dimensional images pertains to medical domain and is used for knee injury classification. The plurality of three-dimensional images comprise a plurality of slices and a plurality of modalities. The first dataset further comprises a set of labeled multi-sliced and multi-modal samples of plurality of three-dimensional images related to a first classification task and the second dataset further comprises (i) a set of labeled multi-sliced and multi-modal samples and (ii) a set of unlabeled multi-sliced and multi-modal samples related to a second classification task. In an embodiment, the first dataset comprises a huge amount of labeled data (i.e., abundant labeled dataset) whereas the second dataset comprises a small amount of labeled data (i.e., scarcely labeled dataset) and a huge amount of unlabeled data. In the context of the present disclosure, the first dataset is referred as source dataset and the first classification task is referred as source task. Similarly, the second dataset is referred as target dataset and the second classification task is referred as target task. This is assumed based on an observation that while data availability is scarce for a certain diagnosis, abundant labeled data may be available for a different but related diagnosis. Hence, the abundant (labeled) dataset is considered as the source dataset from which knowledge is learned and transferred to improve the performance of the models over the target diagnosis provided the scarcely labeled dataset. Secondly, in many cases, it is observed that while labeled data are scarce for a certain diagnosis, there is a good amount of unlabeled data available for the same diagnosis. In another embodiment, two separate datasets $D_{source}$ and $D_{target}$ are used. The first dataset, $D_{source} = \{(x_s^i, y_s^i)\}_{i=1}^{M}$ consist of magnetic resonance (MR) images xs of a knee injury disease $d_1$ with corresponding groundtruth labels $y_s^i \in \{0,1\}$. On the other hand, $D_{target} = \{(x_t^i, y_t^i)\}_{i=1}^{L} \cup \{(x_t^j)\}_{j=L+1}^{L+U}$ consists of MR image data $x_t^i$ for another knee injury disease

$d_2$ such that $L + U << M$ and the corresponding labels $y_t^i \in \{0,1\}$ exist for only a small fraction of the data, i.e., $L <<$ $U$. In the traditional supervised settings, given only the small amount of labeled data $\{(x_t^i, y_t^i)\}_{i=1}^{L}$ for the target diagnosis $d_2$, the deep learning models become prone to overfitting. Hence, a training regime is applied to transfer knowledge from $D_{source}$ to $D_{target}$ while additionally taking advantage of the abundant unlabeled data available for the target diagnosis $d_2$.

Further, at step 204 of FIG. 2A, the one or more hardware processors 104 are configured to input the first dataset to a fuzzy deep learning architecture. FIG. 3 is a functional block diagram of the fuzzy deep learning architecture for one stream, in accordance with some embodiments of the present disclosure. There exists one stream corresponding to each slice of input MRI with a max-pool step across the streams for the final output. As shown in FIG. 3, the fuzzy deep learning architecture comprises (i) a backbone comprising a plurality of convolutional blocks and (ii) a plurality of fuzzy layers, and (iii) a classification head comprising a plurality of average-pooling layers followed by a plurality of fully connected layers and a plurality of max-pool layers. Each of the plurality of convolutional blocks comprises a convolutional neural network (CNN) layer followed by rectified linear activation unit (ReLu), and a first, a second and a fourth convolutional block from the plurality of convolutional blocks comprises a max-pool layer with a down-sampling factor of 2.

The fuzzy deep learning architecture perform steps of (i) obtaining a first subset of input features of each slice of the plurality of three-dimensional images for the first classification task from each intermediate convolutional block from the plurality of convolutional blocks (ii) obtaining a set of input features of each slice of the plurality of three-dimensional images for the first classification task by up-sampling and adding the first subset of input features to a second subset of input features of each slice of the plurality of three-dimensional images for the first classification task obtained from a previous block, (iii) applying a corresponding feature from the set of input features of each slice of the plurality of three-dimensional images for the first classification task to each of the plurality of fuzzy layers, (iv) performing a max-pool operation across each of the set of input features of each of the plurality of slices of the plurality of three-dimensional images to obtain a set of max-pool input features, and (v) inputting the set of max-pool input features to a corresponding fully connected layer from a plurality of fully connected layers of the classification head followed by a sigmoid function to obtain a set of probabilities for each image from the plurality of three-dimensional images.

FIG. 4 is a functional block diagram of a fuzzy layer comprised in the fuzzy deep learning architecture, in accordance with some embodiments of the present disclosure. As shown in FIG. 4, each of the plurality of fuzzy layers comprises an ordered weighted averaging (OWA) layer, a sorting function, and a weighted aggregation layer. The plurality of fuzzy layers are one dimensional and two-dimensional based on type of a weighting vector. In an embodiment, each of the plurality of fuzzy layers augments an incoming information to each corresponding feature in the set of input features. In the context of present disclosure, the incoming information refers to new information. The incoming information is augmented by creating a set of input feature maps that are created by sorting a plurality of channels in descending order. Sorting is performed using a sorting function which is based on a channel metric and applying OWA layers through linear combinations of the sorted plurality of channels.

In other words, the fuzzy deep learning architecture may use any deep-learning based backbone such as Alexnet backbone. The Alexnet backbone comprises five convolutional blocks and each convolutional block is composed of a CNN layer followed by ReLU activation, while some of the convolutional blocks also have a max-pool layer. The outputs of these blocks are appropriately up-sampled both spatially as well as channel-wise and added to the feature maps from the previous block. The features from the previous blocks are also acted on by $1 \times 1$ convolutional kernels with ReLU activation. Then, the resultant feature maps are passed on to the fuzzy layer which sorts the channels and applies OWA operators to form new feature maps through linear combinations of the sorted input channels. At the output of the fuzzy layer, we have the new feature maps concatenated with the unsorted input feature maps. This is followed by a classification head which consists of global average pooling layers followed by fully connected layers and max-pool. Overall, this is one stream of the model which acts on a single slice of the input MRI and there is one stream corresponding to each slice of the input. The single slice input for a stream is repeated thrice for the channel requirements to confirm the backbone architecture. Max-pool is applied over the outputs of the multiple streams to obtain a final class probability. Further, the weights are shared across the streams of the model.

The step 204 is further illustrated and better understood by way of following exemplary explanation.

Apart from applying low-data strategy on baseline models, the plurality of fuzzy layers using two different versions are used in the present disclosure. Each fuzzy layer consists of an OWA layer, a sorting function, and a weighted aggregation step. For an input set of feature maps $F_{in}$ with c channels, the sorting function is used to sort the channels in descending order based on a channel metric. For the plurality of fuzzy layers used in the present disclosure, metric provided below in equation (2) is used for sorting the channels:

$$s\big(F(f)\big) = -\sum_{m=1}^{M}\sum_{n=1}^{N} f_{m,n} \log f_{m,n} \quad (2)$$

Here, s is the metric used for sorting the channels, $F(f)$ is the $f^{th}$ channel of the input feature map set with $f$ = 1, 2,..., c, and each of the channels have a spatial dimension of $M \times N$. After this step, a sorted version of $F_{in}$, denoted by $\widehat{F_{in}}$ with c channels is obtained. The two versions of the plurality of fuzzy layers differ in the weighting vectors' dimensions. For the first version, the vector $W = [w_1, w_2, ..., w_c]$ is one-dimensional with each $w_i$ being used to weight entire corresponding feature map. Whereas for the second version, the weighting vector is two-dimensional. Each channel of $\widehat{F_{in}}$ is divided into 8 $\times$ 8 grids and weighing is done patch-wise instead of a single value weighting the whole channel. The weight vector is of dimension 8 $\times$ 8 $\times$ c, where each of the c channels of $\widehat{F_{in}}$ has an 8 $\times$ 8 associated weight vector, of which each $w_{i,j}$ is used to weight one grid unit of the corresponding channel.

Thus, the deep learning model using the first version of the fuzzy layer is named MRFuz1DNet, and the other using the 2D version of the fuzzy layer is named MRFuz2DNet. It is observed that the first version of the fuzzy layer is close to the OWA layer proposed in a state-of-the-art-work (e.g., refer '*Iris Dominguez-Catena*, Daniel Paternain, and Mikel Galar. 2020. Additional feature layers from ordered aggregations for deep neural networks. In 2020 IEEE International Conference on Fuzzy Systems (FUZZ-IEEE). IEEE, 1-8. '), except imposing hard constraints on weight values given by S.1 and S.2 as defined in Equation 1. This increases the capacity of deep learning models and allows them to learn appropriate weight transformations automatically. The weights are randomly initialized following a normal distribution $N(0, 1)$. Also, these weight vectors are updated in training process as part of the model parameters. Finally, the sorted feature maps are weighted using their corresponding weights and aggregated to produce a new fused map. There are t different OWA operators with their corresponding weighting vectors used to create t new maps. These new maps are then augmented to the unsorted input feature maps $F_{in}$ to produce final output of the fuzzy layers, $F_{op}$ with $c + t$ channels. This results in learning additional features that a base model is unable to learn.

The fuzzy deep learning architecture comprises a plurality of deep learning models (alternatively referred as models). The plurality of deep learning models under consideration are pretrained using the source dataset for the first classification task $d_1$. This corresponds to Stage 0 of a multi-stage training process. In this stage, the plurality of deep learning models have access to a good amount of data that helps learn important features images and provides the plurality of deep learning models with suitable weight initializations before learning on the smaller target dataset. Stage 0 is then followed by the 'finetuning stages'.

Furthermore, at step 206 of FIG. 2B, the one or more hardware processors 104 are configured to iteratively perform a plurality of steps until a stopping criterion is satisfied. The stopping criteria indicates a saturation in classification performance of the fuzzy deep learning architecture. The plurality of steps comprising:

Step 1. Training, fuzzy deep learning architecture using the set of multi-sliced and multi-modal labeled samples in the second dataset. The trained fuzzy deep learning architecture is used to learn the one or more relevant features of the plurality of three-dimensional images for the second classification task in accordance with task adaption involving knowledge transfer from the first classification task to the second classification task.

Step 2. Generating, a plurality of pseudo-labels for the set of multi-sliced and multi-modal unlabeled samples in the second dataset for the second classification task.

Step 3. Filtering an optimum fraction of the set of unlabeled samples of the plurality of three-dimensional images in the second dataset for the second classification task based on a model confidence for the generated plurality of pseudo-labels. Output of each of the plurality of deep learning models is a probability score (also referred as predicted score) for a class ranging from 0 to 1. For a deep learning model, the farther the probability score is from 0.5, more confident the deep learning models is about its prediction. For example, if the probability score is 0.4, predicted label is 0 since score < 0.5. But the deep learning model is not very confident about prediction. However, if the probability score is 0.1, the deep learning model is very confident that the class is 0 since 0.1 is much closer to 0 than 0.4. Similarly for class 1 ( i.e., for scores > 0.5), the higher the probability score, more confident the deep learning model is. The optimum fraction of the set of unlabeled samples of the plurality of three-dimensional images in the second dataset for the second classification task is top $p$% of the set of unlabeled samples.

Step 4. Augmenting the optimum fraction of the set of unlabeled samples of the plurality of three-dimensional images in the second dataset for the second classification task with corresponding pseudo-labels from the plurality of pseudo-labels; and

Step 5. Fine tuning the fuzzy deep learning architecture using (i) the set of labeled multi-sliced and multi-modal samples of the plurality of three-dimensional images in the second dataset and (ii) the optimum fraction of the set of multi-sliced and multi-modal unlabeled samples of the plurality of three-dimensional images in the second dataset for the second classification task augmented with corresponding pseudo-labels from the plurality of pseudo-labels;

Step 6. Generating, a plurality of pseudo-labels for a remaining set of multi-sliced and multi-modal unlabeled samples in the second dataset for the second classification task; and

Step 7. Performing steps 2 through 5 for the remaining set of multi-sliced and multi-modal unlabeled samples in the second dataset for the second classification task.

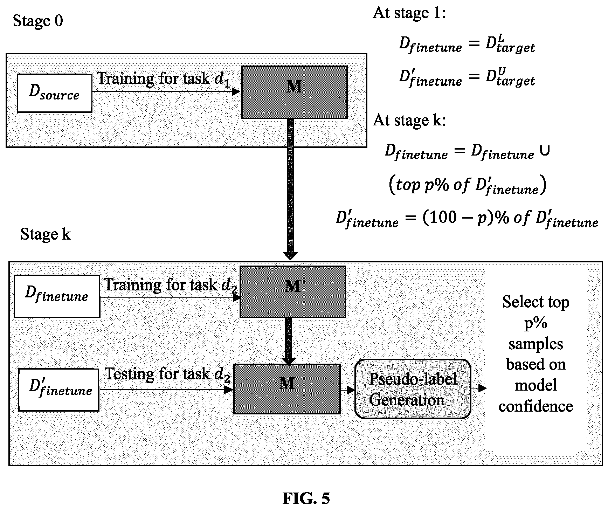

In an embodiment, the step 206 is further better understood by way of FIG. 5 and following exemplary explanation.

FIG. 5 is a flow diagram illustrating the steps of combined usage of task adaptation and pseudo-label generation as a training regime using fuzzy deep learning architecture, in accordance with some embodiments of the present disclosure, in accordance with some embodiments of the present disclosure. As shown in FIG. 5, the plurality of deep learning models under consideration are pretrained using $D_{source}$ for the first classification task $d_1$. This corresponds to Stage 0 of the multi-stage training process. In this stage, the models have access to a good amount of data that helps learn the important features of the MR-images and provides the models with suitable weight initializations before learning on the smaller $D_{target}$ set. This is in line with the transfer learning that is applied when models have access to less amount of data in the target domain and hence uses pretrained weights learned on much larger datasets. Some of the models under consideration in the present disclosure, especially ones with a larger number of parameters, are pre-trained on Imagenet dataset before Stage 0, which empowers the models with a capacity to learn meaningful representations. However, since the images in the Imagenet dataset are substantially different in quality compared to the target domain, another round of pretraining with a more related dataset helps the model learn relevant features and focus on target areas in the input images. Stage 0 is then followed by the 'finetuning stages'. The finetuning stages have two main steps, first is a training step for which input is a labeled set $D_{finetune} = \{(x_i, y_i)\}$ and the second is a prediction step for which the input is $D'_{finetune} = \{(x_i)\}$. In Stage 1 of finetuning, only a small fraction (say $p\%$) of labeled data available in $D_{target}$, denoted by $D^L_{target}$ is employed and the models are trained for second classification task, $d_2$, that is $D_{finetune} = D^L_{target}$. This accomplishes the knowledge transfer from the first classification task $d_1$ to the second classification task $d_2$. Compared to directly training the models on $D^L_{target}$, such knowledge transfer from related domains substantially improves classification performance. However, further stages of finetuning are carried out using the unlabeled part of the dataset, denoted by $D^U_{target}$. This is done by augmenting the unlabeled MR input images $x^j_t$ with pseudo-labels $\widehat{y^j_t}$. These pseudo-labels are acquired by using the model obtained at Stage 1 and predicting labels for the unused unlabeled data samples, $D^U_{target}$. Out of all these samples in $D^U_{target}$, only the top $p\%$ are chosen. based on the models' confidence for the predicted labels. In other words, only the highest confidence $p\%$ originally unlabeled samples are chosen and augmented with pseudo-labels, and $D'_{finetune} = top\ p\%\ of\ D^U_{target}$. This new partition of $D^U_{target}$ is used along with $D^L_{target}$ in Stage 2 of finetuning. That is, at Stage 2, the models obtained at Stage 0 are once again finetuned for the second classification task $d_2$ using

$$D_{finetune} = \left\{ D_{finetune} = \{(x^i_t, y^i_t)\}^L_{i=1} \right\} \cup \left\{ D'_{finetune} = \{(x^j_t, \widehat{y^j_t})\}^{p\%\ of\ U}_{j=1} \right\}$$

. The remaining unused unlabeled $(100 - p)\%$ samples of $D^U_{target}$ constitutes $D'_{finetune}$ for the Stage 2. Again, at the end of Stage 2, the resulting finetuned model is used to predict labels for the remaining samples in $D'_{finetune}$ and the top $p\%$ are chosen and augmented to $D_{finetune}$ before the next stage of finetuning.

The entire multi-stage training process is formulated as provided in equations (3), (4), (5) and (6):

At stage 1:

$$D_{finetune} = D_{target}^{L} \quad (3)$$

$$D'_{finetune} = D_{target}^{U} \quad (4)$$

At stage k:

$$D_{finetune} = D_{finetune} \cup \left( top\ p\%\ of\ D'_{finetune} \right) \quad (5)$$

$$D'_{finetune} = (100 - p)\%\ of\ D'_{finetune} \quad (6)$$

This process is repeated for $k = n,$ ideally until there is saturation in the classification performance. This multi-stage training process helps utilize the otherwise unexploited potential of unlabeled data, in a simple and efficient manner.

**Experimental Analysis:**

In the present disclosure, a known in the art MRNet Knee MRI dataset is utilized for experimental evaluation. The MRNet Knee MRI dataset provides 1130 training samples and 120 validation samples. In the present disclosure, the provided dataset partitions are reorganized as follows: a. provided validation set is used as a test set, $X_{test}$, while given training set is partitioned to carve out a new validation set, $X_{Val}$, of 100 samples. A new validation set is formed using stratified random sampling to maintain similar statistics compared to the test set. Thus, new partitions includes (i) a training dataset represented by $X_{train}$ comprising 1030 samples, (ii) the new validation set $X_{Val}$ comprising 100 samples and the test set $X_{test}$ comprising 120 samples. In addition, each sample is available in three different series namely, sagittal plane T2-weighted series, coronal plane T1-weighted series, and axial plane proton density (PD) weighted series. On the other hand, each sample also comprises ground truth labels available for three different knee injury diagnoses namely ACL tear, Meniscal tear and Abnormal. Each MRI slice has a spatial dimension of $256 \times 256$ and number of slices ranges from 17 to 61 (i.e., mean 31.48 and standard deviation 7.97).

Next, each of $X_{train}$, $X_{test}$, and $X_{Val}$ are further divided into two sets, such that 60% of the data forms the first dataset $D_{source}$ for the first classification task $d_1$ (i.e., source task) and the remaining 40% forms the second dataset $D_{target}$ for the second classification task $d_2$ (i.e., target task) d2. For $D_{target}$, only $p\%$ of the samples retain their labels and constitute $D_{target}^{L}$, while the labels for remaining 100 - $p\%$ samples are discarded and these form $D_{target}^{U}$. As such, each of $D_{source}$ and partitions of $D_{target}$ have their own train, test, and validation sets. The train sets are used in the training of the models and test sets are kept untouched for final evaluation. The validation sets are used to choose best models based on best validation scores. Metric employed is commonly used Area Under the receiver operator characteristics Curve (AUC) value. In various stages of finetuning, partitions $D_{finetune}$ and $D'_{finetune}$ are created as shown in FIG. 5. Experimented values of percentage $p$ of labeled data available for second classification task $d_2$ (out of original 40% carved out) are 5%, 10%, 25% and 50%.

In an embodiment, since there are three views or planes as well as three tasks, keeping modality constant, a total of 27 combinations can be used as a choice of $d_1$, $d_2$ and plane. In addition, each of these combinations were run for each of the four $p$ values. Due to time and resource constraints, experiments in the present disclosure are confined to a small set of combinations. Overall, three combinations of $d_1$ - $d_2$ are chosen randomly (Abnormal-ACL, Abnormal-Meniscus, and ACL-Meniscus), and each of these are run for all three planes as well as all four p values. The idea behind three core combinations stems from a fact that a check on whether the network is able to learn specialized features for ACL and Meniscus given other abnormal cases is done. Further, issue of missing one of ACL or Meniscus during diagnosis is a critical problem in current manual processes. Hence, this has been added with the source task as ACL and target task as Meniscus.

**Models:**

In the present disclosure, the training regime is applied to three base models. The first model is MRNet which uses a feature extractor based on AlexNet. The second model is a fuzzified version of MRNet, denoted MRFuz1DNet, and using one-dimensional version of the fuzzy layer. Similarly, the third model is MRFuz2DNet, which differs from MRFuz1DNet in using a 2D weight vector in the fuzzy layers. The training regime described in the present is compared with existing baseline (*B*) methods as noted below:

a. The first model is MRNet, denoted as MRNet(B) to differentiate from the model where the proposed training regime is applied.
b. ELNet which uses a light-weight custom model trained from scratch and denoted as ELNet(B).
c. Two versions of MRPyrNet, one using MRNet as the backbone and another using ELNet as the backbone, denoted as MRPyrNet+MRNet(B) and MRPyrNet+ELNet(B), and
d. The proposed fuzzified deep learning models are also implemented without applying the training regime and are denoted as MRFuz1 DNet(B) and MRFuz2DNet(B).

**Implementation details:**

All the models are implemented in Pytorch. Except for ELNet, all other models' (backbone) weights are initialized using Imagenet pretrained weights. Each training round for all the models except ELNet occurs for 50 epochs. ELNet is trained for 200 epochs as it is trained from scratch. The rest of the hyperparameters for the baseline models follow default configurations in original implementations. Configurations remain same across various $d_1$, $d_2$, $p\%$ and plane combinations, without much hyperparameter tuning. The best models are saved based on chosen metric of AUC achieved for the validation sets. For the finetuning stages of proposed training framework, training is done for $k = 4$ stages based on empirical evidence. The performance is evaluated using two-fold cross-validation.

**Experimental Results:**

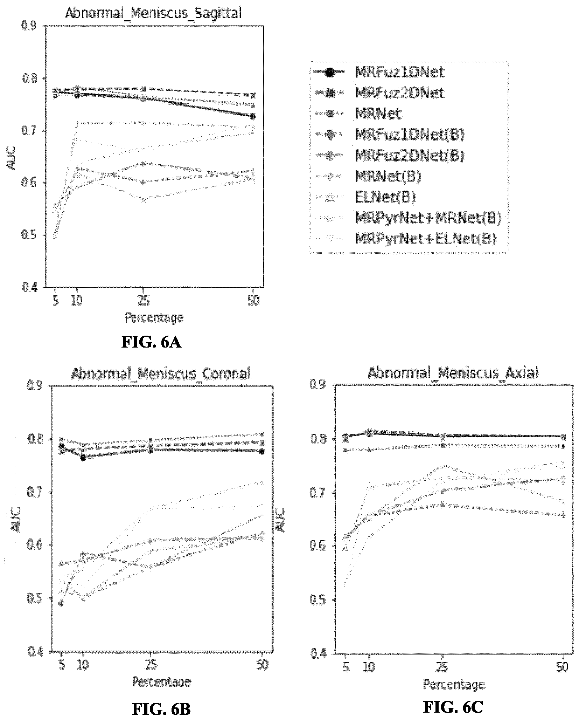

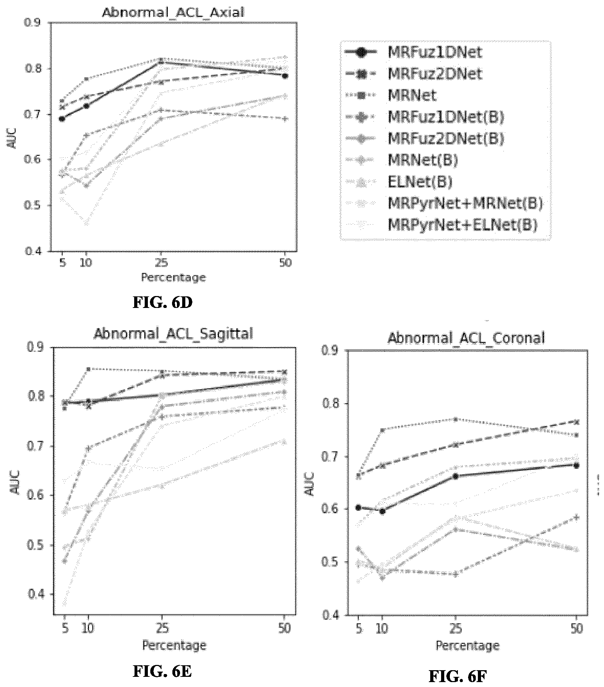

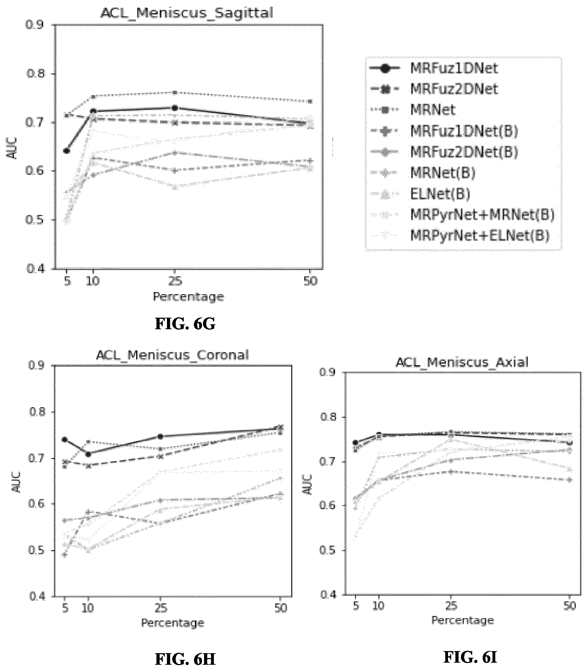

FIGS. 6A through 6I depict graphical representations illustrating a performance comparison of the method of present disclosure with baseline models in terms of Area Under the receiver operator characteristics Curve (AUC) across four stages of finetuning at each of the four $p$ values, in accordance with an embodiment of the present disclosure. For each $p$ value, the best AUC achieved across the 4 stages is plotted. In FIGS. 6A through 6I, X-axis shows percent of labeled data used on the fine tuning stages (5%, 10%, 25%, 50%) and Y-axis shows the AUC values. Title of each plot is named as source_task-target_task-plane. Three models namely MRNet, MRFuz1DNet, and MRFuz2DNet trained using the training regime of the present disclosure are under consideration. Apart from this, multiple baselines trained using a traditional supervised setting are shown for comparison and denoted as Model-name(B). As shown in In FIGS. 6A through 6I, for majority of the cases, training framework of the present disclosure improves the performance of the underlying models substantially compared to all the baselines. Particularly, for combination 1 where $d_1$ = Abnormal and $d_2$ = Meniscus, all the models using the training framework of the present disclosure perform better than the baselines at all four $p$ values. While for combination 2 where $d_1$ =Abnormal and $d_2$ = ACL, MRFuz1DNet underperforms for coronal plane compared to MRNet(B) while all the three models underperform at higher $p\%$ values compared to MRNet(B) and MRPyrNet+ELNet(B). For the third combination of $d_1$ = ACL and $d_2$ = Meniscus, the proposed models perform better than the baselines except in the sagittal plane where MRFuz2DNet is an underperformer compared to MRNet(B) at higher $p\%$ values. Amongst the three models trained using the training framework of the present disclosure, the performance is comparable for the first combination with MRFuz2DNet performing better in most of the cases, for the second combination MRNet seems to perform better in most of the cases, while for the third combination, the performance is comparable across the three models.

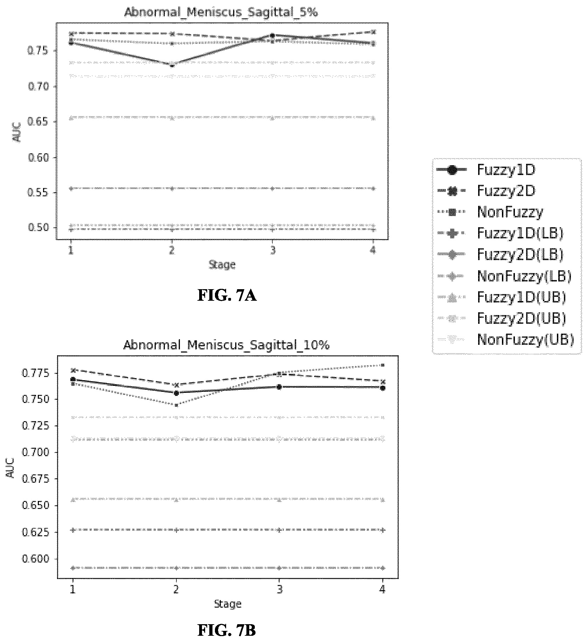

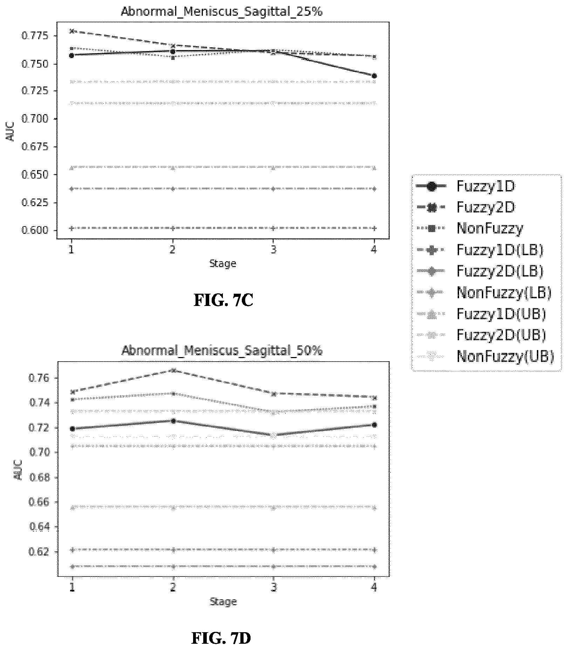

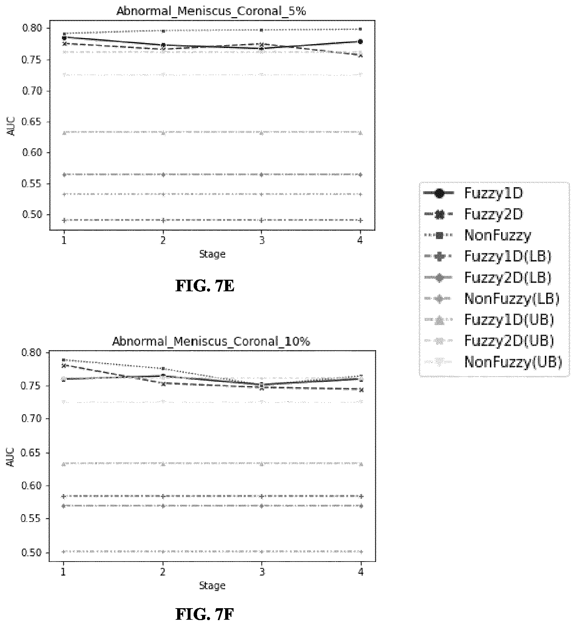

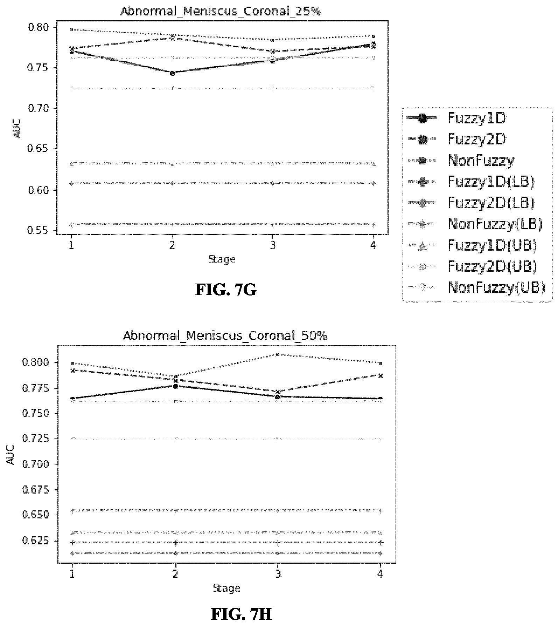

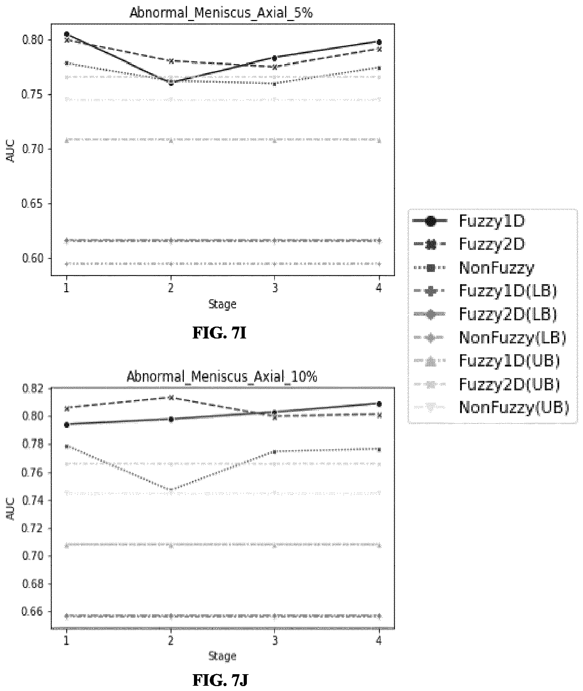

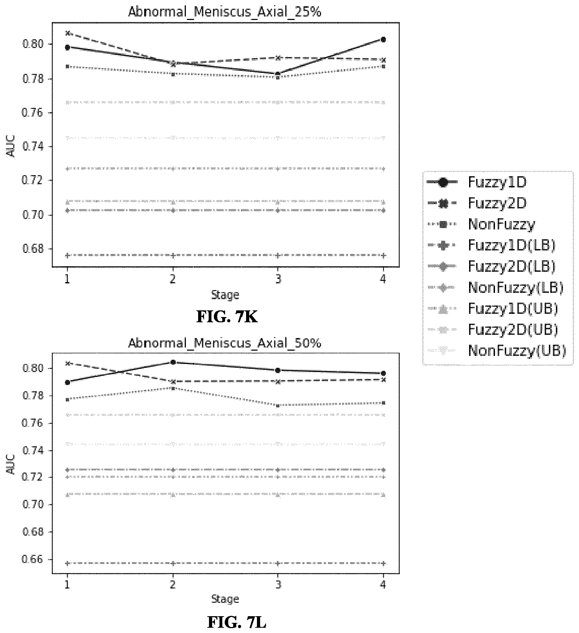

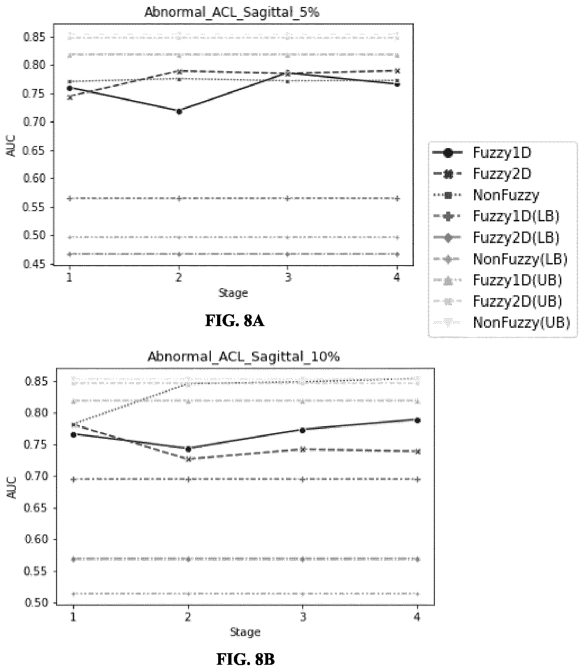

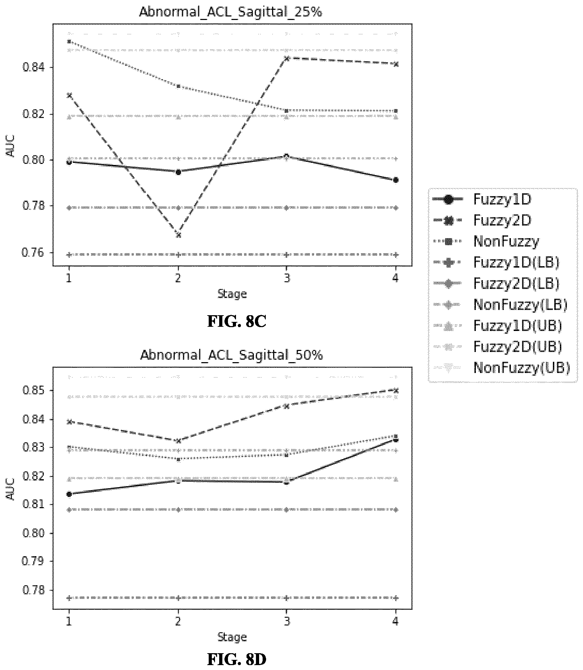

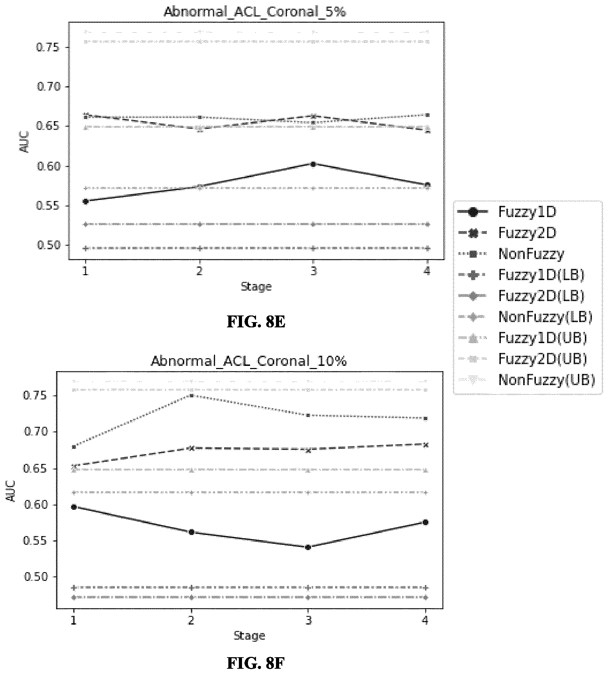

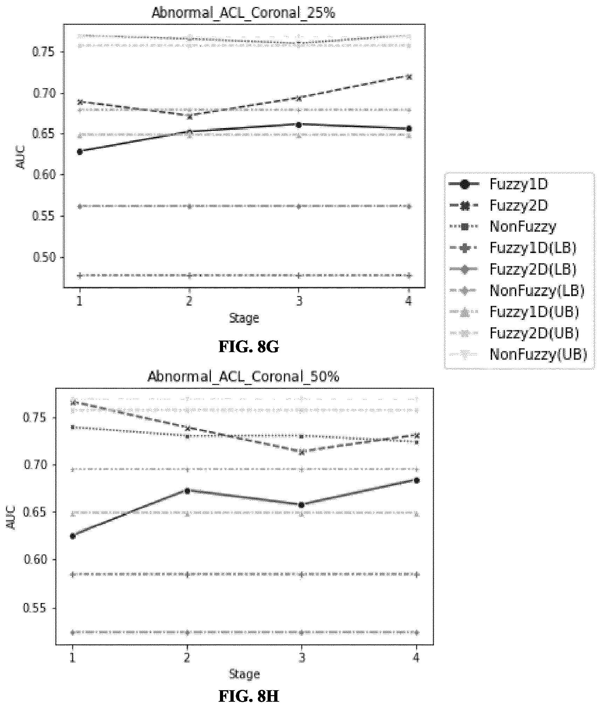

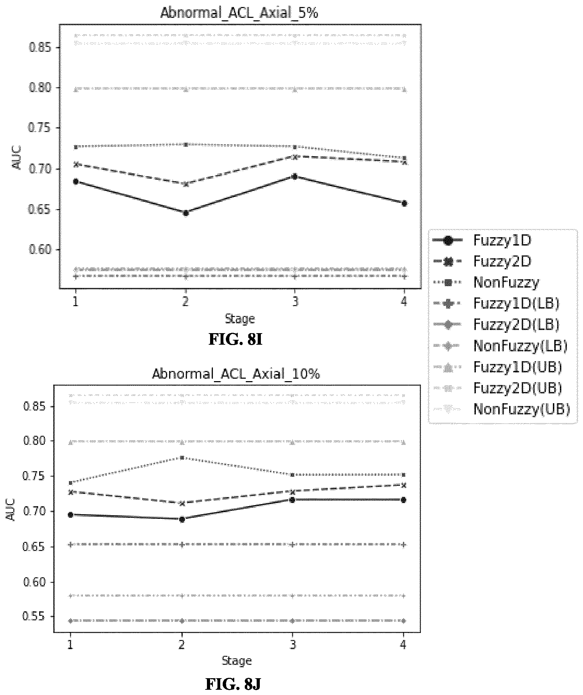

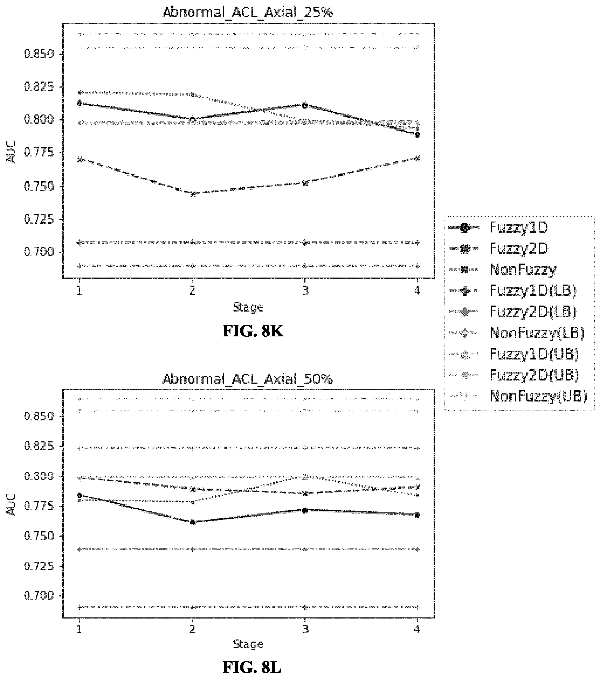

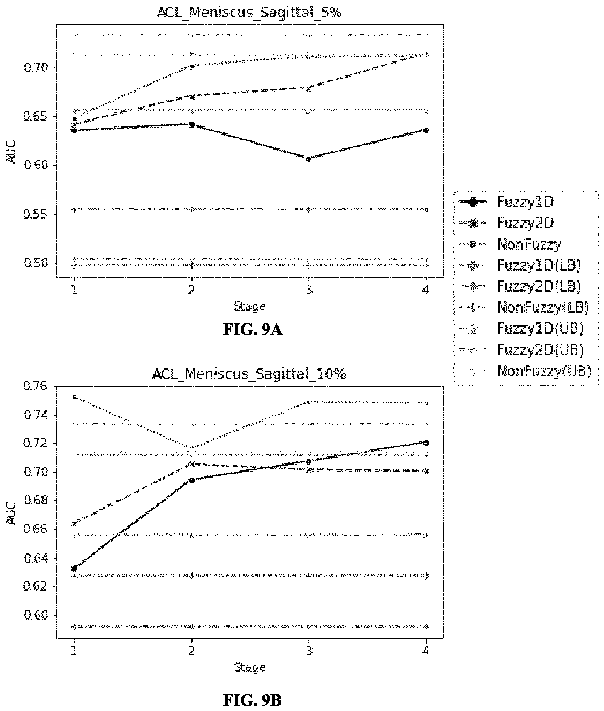

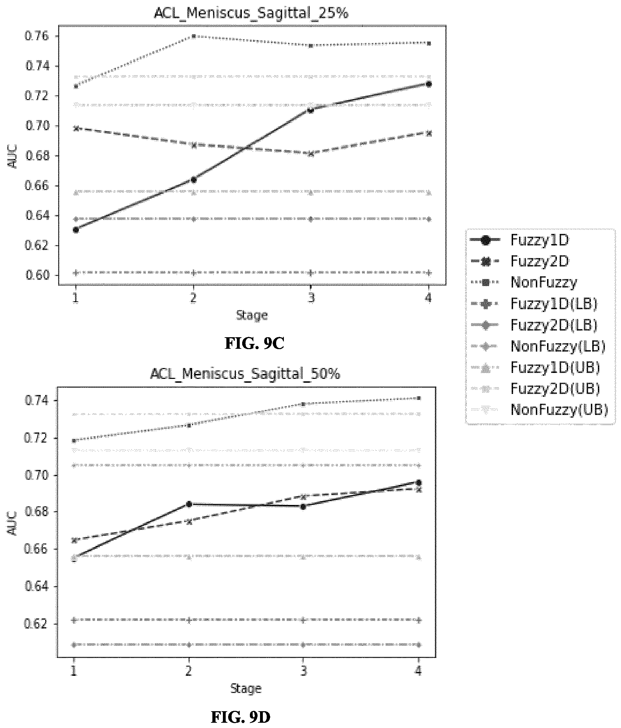

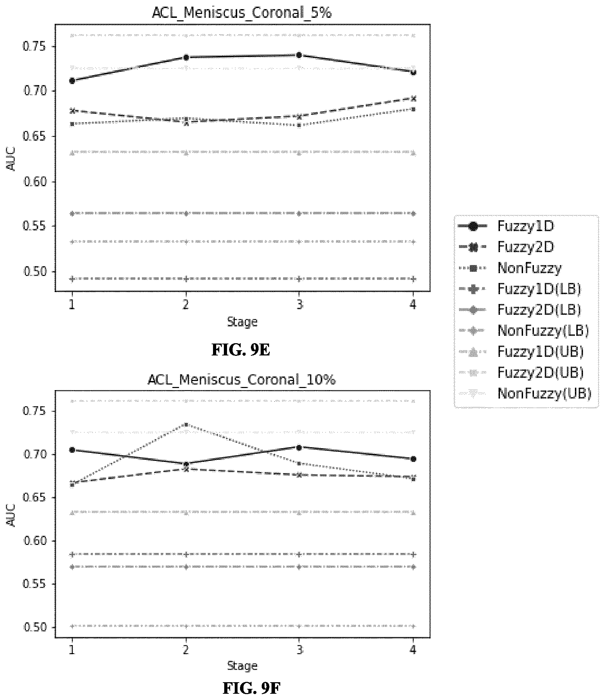

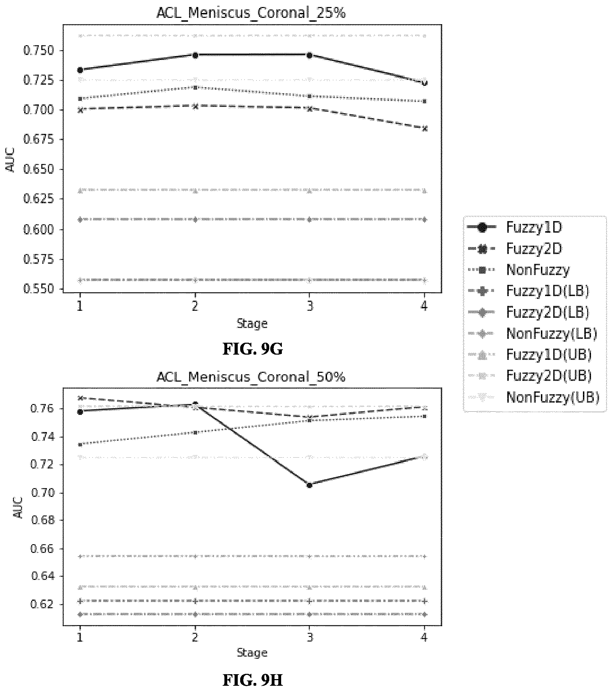

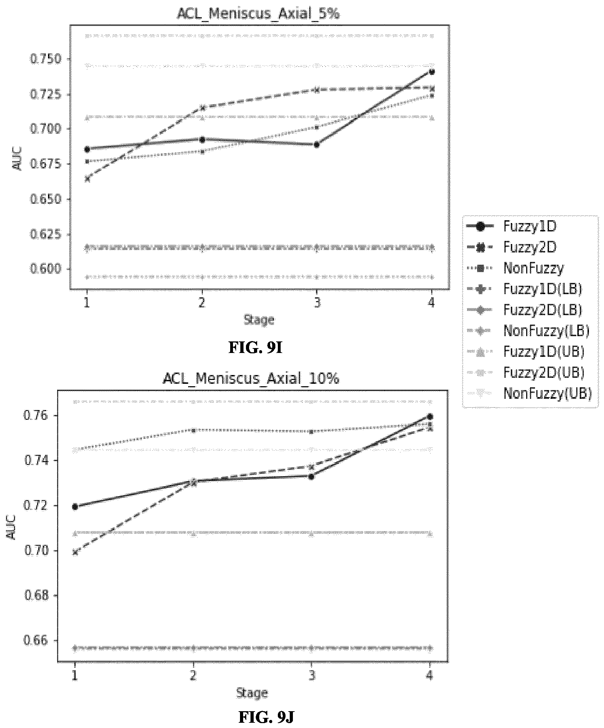

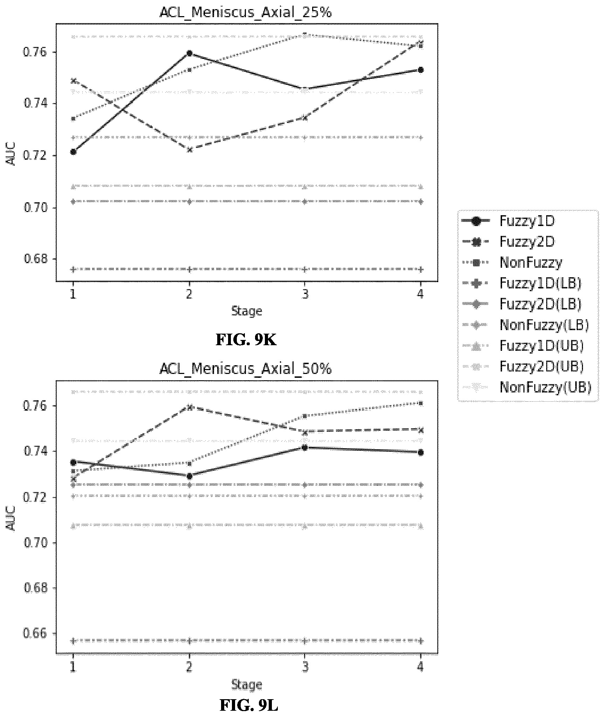

FIGS. 7A through 7L depict graphical representations illustrating performance comparison of the models in terms of AUC across four stages of finetuning for target task Meniscus and knowledge transferred from source task Abnormal, in accordance with an embodiment of the present disclosure. FIGS. 8A through 8L depict graphical representations illustrating performance comparison of the models in terms of AUC across four stages of finetuning for target task ACL and knowledge transferred from source task Abnormal, in accordance with an embodiment of the present disclosure. FIGS. 9A through 9L depict graphical representations illustrating performance comparison of the models in terms of AUC across four stages of finetuning for target task Meniscus and knowledge transferred from source task ACL, in accordance with an embodiment of the present disclosure. In other words, the performance of the models across $k = 4$ stages of finetuning is also observed and visualized in FIGS. 7A through 9L. In FIGS. 7A through 9L, the MR planes (Sagittal, Coronal, and Axial) are shown and different fractions of labeled data available for the target task at stage 1 (5%, 10%, 25%, and 50%) are represented. The title of each graph is named as source-target-plane-fraction. Three models under consideration, are MRNet, MRFuz1DNet, and MRFuz2DNet. Graphs shown in FIGS. 7A through 9L also show respective upper and lower bounds of the models denoted with UB and LB, respectively. In other words, FIGS. 7A through 9L are for the three combinations, showing data for one plane amongst three planes and for one $p$% value amongst four $p$% values. Along with the performance of the three models with the training regime of the present disclosure applied, the graphs also show their respective upper and lower bounds. The upper bound is obtained by training the base models using entire $D_{target}$ set carved out initially for task $d_2$ along with ground truth labels for each of the samples. This provides an idea of how well the model can perform in best-case scenario of having access to a reasonable amount of labeled data. It is observed that these versions of the model are not pretrained on $D_{source}$ but only on the whole of

$D_{target}$. For the lower bounds, the models are trained directly on the $D_{target}^{L}$ which contains the $p$% samples of $D_{target}$ assumed to have ground truth labels. Again, this gives an estimate of the model's performance in worst-case scenario of having access to a very small amount of labeled data alone. The models using pretrained Imagenet weights continue doing so in both the lower and upper bound cases. Overall, the models perform better than lower bounds substantially and for some cases even surpass the upper bounds.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

While deep learning has proven advantageous in many fields, the need for huge amounts of data remains one of its major limitations. Especially in biomedical domains, data is usually scarce, and labeled data is even further so. Hence, in such low-labeled-data setting, traditional supervised learning approaches fail to generalize with acceptable performance. The diagnosis of knee ligamentous injuries and meniscal injuries is incredibly complex and relies a great deal on clinical examination. The choice of modality and the amount of MRI data available to train machine learning models influence full automation. The present disclosure addresses unresolved problems of traditional methods from two directions. Firstly, while data availability is scarce for a certain diagnosis, abundant labeled data may be available for a different but related diagnosis. Hence, the abundant labeled dataset is considered as a source set from which knowledge is learned and transferred to improve performance of the deep learning models over a target diagnosis provided the scarcely labeled dataset. Secondly, in many cases, it is observed that while labeled data are scarce for a certain diagnosis, there is a good amount of unlabeled data available for the same diagnosis. In other words, a new multi-stage training framework is disclosed to take advantage of low-quality data without labels and data from related diagnoses. The underlying models are strengthened using fuzzy layers which add desired soft computing properties. Results demonstrate the use of task adaptation regime in medical imaging that is achieved with a combination of low-shot training regime and the use of soft computing approach in deep learning framework. Since it takes extensive labor to carry out labeling, the present disclosure propose to utilize the unlabeled data to improve.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means, and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

**Claims**

1. A processor implemented method (200), comprising:

   receiving (202), via one or more hardware processors, a first dataset and a second dataset comprising a plurality of three-dimensional images, wherein the plurality of three-dimensional images comprise a plurality of slices and a plurality of modalities, and wherein the first dataset comprises a set of labeled multi-sliced and multi-modal samples of plurality of three-dimensional images related to a first classification task and the second dataset comprises (i) a set of labeled multi-sliced and multi-modal samples and (ii) a set of unlabeled multi-sliced and multi-modal samples related to a second classification task;
   inputting (204), via the one or more hardware processors, the first dataset to fuzzy deep learning architecture which is pretrained using the first dataset for the first classification task, wherein the fuzzy deep learning architecture comprises (i) a backbone comprising a plurality of convolutional blocks and (ii) a plurality of fuzzy layers, and (iii) a classification head comprising a plurality of average pooling layers followed by a plurality of fully connected layers and a plurality of max-pool layers, and wherein each of the plurality of fuzzy layers comprises an ordered weighted averaging (OWA) layer, a sorting function, and a weighted aggregation layer; and
   iteratively performing (206), via the one or more hardware processors, a plurality of steps until a stopping criterion is satisfied, the plurality of steps comprising:

      (i) training, the fuzzy deep learning architecture using the set of multi-sliced and multi-modal labeled samples in the second dataset;
      (ii) generating, a plurality of pseudo-labels for the set of multi-sliced and multi-modal unlabeled samples in the second dataset for the second classification task;
      (iii) filtering an optimum fraction of the set of unlabeled samples of the plurality of three-dimensional images in the second dataset for the second classification task based on a model confidence for the generated plurality of pseudo-labels;
      (iv) augmenting the optimum fraction of the set of unlabeled samples of the plurality of three-dimensional images in the second dataset for the second classification task with corresponding pseudo-labels from the plurality of pseudo-labels;
      (v) fine tuning the fuzzy deep learning architecture using (a) the set of labeled multi-sliced and multi-modal samples of the plurality of three-dimensional images in the second dataset and (b) the optimum fraction of the set of multi-sliced and multi-modal unlabeled samples of the plurality of three-dimensional images in the second dataset for the second classification task augmented with corresponding pseudo-labels from the plurality of pseudo-labels;
      (vi) generating, a plurality of pseudo-labels for a remaining set of multi-sliced and multi-modal unlabeled samples in the second dataset for the second classification task; and
      (vii) performing steps of training the fuzzy deep learning architecture till finetuning for the remaining set of multi-sliced and multi-modal unlabeled samples in the second dataset for the second classification task.

**2.** The processor implemented method as claimed in claim 1, wherein each of the plurality of convolutional blocks comprises a convolutional neural network (CNN) layer followed by rectified linear activation unit (ReLu), and a first, a second and a fourth convolutional block from the plurality of convolutional blocks comprises a max-pool layer with a down-sampling factor of 2.

**3.** The processor implemented method as claimed in claim 1, wherein the fuzzy deep learning architecture perform steps of:

(i) obtaining a first subset of input features of each slice of the plurality of three-dimensional images for the first classification task from each intermediate convolutional block from the plurality of convolutional blocks;
(ii) obtaining a set of input features of each slice of the plurality of three-dimensional images for the first classification task by up-sampling and adding the first subset of input features to a second subset of input features of each slice of the plurality of three-dimensional images for the first classification task obtained from a previous block;
(iii) applying a corresponding feature from the set of input features of each slice of the plurality of three-dimensional images for the first classification task to each of the plurality of fuzzy layers;
(iv) performing a max-pool operation across each of the set of input features of each of the plurality of slices of the plurality of three-dimensional images to obtain a set of max-pool input features; and
(v) inputting the set of max-pool input features to a corresponding fully connected layer from a plurality of fully connected layers of the classification head followed by a sigmoid function to obtain a set of probabilities for each image from the plurality of three-dimensional images.

**4.** The processor implemented method as claimed in claim 3, wherein each of the plurality of fuzzy layers augments an incoming information to each corresponding feature in the set of input features, and wherein the incoming information is augmented by creating a set of input feature maps that are created by sorting a plurality of channels in descending order.

**5.** The processor implemented method as claimed in claim 1, wherein the plurality of fuzzy layers are one dimensional and two-dimensional based on type of a weighting vector.

**6.** The processor implemented method as claimed in claim 1, wherein the stopping criteria indicates a saturation in classification performance of the fuzzy deep learning architecture.

**7.** The processor implemented method as claimed in claim 1, wherein the trained fuzzy deep learning architecture is used to learn the one or more relevant features of the plurality of three-dimensional images for the second classification task in accordance with task adaption involving knowledge transfer from the first classification task to the second classification task.

**8.** A system (100) comprising:

a memory (102) storing instructions;
one or more Input/Output (I/O) interfaces (106); and
one or more hardware processors (104) coupled to the memory (102) via the one or more I/O interfaces (106), wherein the one or more hardware processors (104) are configured by the instructions to:

receive a first dataset and a second dataset comprising a plurality of three-dimensional images, wherein the plurality of three-dimensional images comprise a plurality of slices and a plurality of modalities, and wherein the first dataset comprises a set of labeled multi-sliced and multi-modal samples of plurality of three-dimensional images related to a first classification task and the second dataset comprises (i) a set of labeled multi-sliced and multi-modal samples and (ii) a set of unlabeled multi-sliced and multi-modal samples related to a second classification task;
input the first dataset to a fuzzy deep learning architecture which is pretrained using the first dataset for the first classification task, wherein the fuzzy deep learning architecture comprises (i) a backbone comprising a plurality of convolutional blocks and (ii) a plurality of fuzzy layers, and (iii) a classification head comprising a plurality of average pooling layers followed by a plurality of fully connected layers and a plurality of max-pool layers, and wherein each of the plurality of fuzzy layers comprises an ordered weighted averaging (OWA) layer, a sorting function, and a weighted aggregation layer; and
iteratively perform a plurality of steps until a stopping criterion is satisfied, the plurality of steps comprising:

(i) training, the fuzzy deep learning architecture using the set of multi-sliced and multi-modal labeled samples in the second dataset;

(ii) generating, a plurality of pseudo-labels for the set of multi-sliced and multi-modal unlabeled samples in the second dataset for the second classification task;

(iii) filtering an optimum fraction of the set of unlabeled samples of the plurality of three-dimensional images in the second dataset for the second classification task based on a model confidence for the generated plurality of pseudo-labels;

(iv) augmenting the optimum fraction of the set of unlabeled samples of the plurality of three-dimensional images in the second dataset for the second classification task with corresponding pseudo-labels from the plurality of pseudo-labels;

(v) fine tuning the fuzzy deep learning architecture using (a) the set of labeled multi-sliced and multi-modal samples of the plurality of three-dimensional images in the second dataset and (b) the optimum fraction of the set of multi-sliced and multi-modal unlabeled samples of the plurality of three-dimensional images in the second dataset for the second classification task augmented with corresponding pseudo-labels from the plurality of pseudo-labels;

(vi) generating, a plurality of pseudo-labels for a remaining set of multi-sliced and multi-modal unlabeled samples in the second dataset for the second classification task; and

(vii) performing steps of training the fuzzy deep learning architecture till finetuning for the remaining set of multi-sliced and multi-modal unlabeled samples in the second dataset for the second classification task.

9. The system as claimed in claim 8, wherein each of the plurality of convolutional blocks comprises a convolutional neural network (CNN) layer followed by rectified linear activation unit (ReLu), and a first, a second and a fourth convolutional block from the plurality of convolutional blocks comprises a max-pool layer with a downsampling factor of 2.

10. The system as claimed in claim 8, wherein the fuzzy deep learning architecture perform steps of:

(i) obtaining a first subset of input features of each slice of the plurality of three-dimensional images for the first classification task from each intermediate convolutional block from the plurality of convolutional blocks;

(ii) obtaining a set of input features of each slice of the plurality of three-dimensional images for the first classification task by upsampling and adding the first subset of input features to a second subset of input features of each slice of the plurality of three-dimensional images for the first classification task obtained from a previous block;

(iii) applying a corresponding feature from the set of input features of each slice of the plurality of three-dimensional images for the first classification task to each of the plurality of fuzzy layers;

(iv) performing a max-pool operation across each of the set of input features of each of the plurality of slices of the plurality of three-dimensional images to obtain a set of max-pool input features; and

(v) inputting the set of max-pool input features to a corresponding fully connected layer from a plurality of fully connected layers of the classification head followed by a sigmoid function to obtain a set of probabilities for each image from the plurality of three-dimensional images.

11. The system as claimed in claim 10, wherein each of the plurality of fuzzy layers augments an incoming information to each corresponding feature in the set of input features, and wherein the incoming information is augmented by creating a set of input feature maps that are created by sorting a plurality of channels in descending order.

12. The system as claimed in claim 8, wherein the plurality of fuzzy layers are one dimensional and two-dimensional based on type of a weighting vector, and wherein the stopping criteria indicates a saturation in classification performance of the fuzzy deep learning architecture

13. The system as claimed in claim 8, wherein the trained fuzzy deep learning architecture is used to learn the one or more relevant features of the plurality of three-dimensional images for the second classification task in accordance with task adaption involving knowledge transfer from the first classification task to the second classification task.

14. One or more non-transitory machine-readable information storage mediums comprising one or more instructions which when executed by one or more hardware processors cause:

receiving, a first dataset and a second dataset comprising a plurality of three-dimensional images, wherein the plurality of three-dimensional images comprise a plurality of slices and a plurality of modalities, and wherein the first dataset comprises a set of labeled multi-sliced and multi-modal samples of plurality of three-dimensional images related to a first classification task and the second dataset comprises (i) a set of labeled multi-sliced and multi-modal samples and (ii) a set of unlabeled multi-sliced and multi-modal samples related to a second classification task;

inputting, the first dataset to fuzzy deep learning architecture which is pretrained using the first dataset for the first classification task, wherein the fuzzy deep learning architecture comprises (i) a backbone comprising a plurality of convolutional blocks and (ii) a plurality of fuzzy layers, and (iii) a classification head comprising a plurality of average pooling layers followed by a plurality of fully connected layers and a plurality of max-pool layers, and wherein each of the plurality of fuzzy layers comprises an ordered weighted averaging (OWA) layer, a sorting function, and a weighted aggregation layer; and

iteratively performing, a plurality of steps until a stopping criterion is satisfied, the plurality of steps comprising:

(i) training, the fuzzy deep learning architecture using the set of multi-sliced and multi-modal labeled samples in the second dataset;

(ii) generating, a plurality of pseudo-labels for the set of multi-sliced and multi-modal unlabeled samples in the second dataset for the second classification task;

(iii) filtering an optimum fraction of the set of unlabeled samples of the plurality of three-dimensional images in the second dataset for the second classification task based on a model confidence for the generated plurality of pseudo-labels;

(iv) augmenting the optimum fraction of the set of unlabeled samples of the plurality of three-dimensional images in the second dataset for the second classification task with corresponding pseudo-labels from the plurality of pseudo-labels;

(v) fine tuning the fuzzy deep learning architecture using (a) the set of labeled multi-sliced and multi-modal samples of the plurality of three-dimensional images in the second dataset and (b) the optimum fraction of the set of multi-sliced and multi-modal unlabeled samples of the plurality of three-dimensional images in the second dataset for the second classification task augmented with corresponding pseudo-labels from the plurality of pseudo-labels;

(vi) generating, a plurality of pseudo-labels for a remaining set of multi-sliced and multi-modal unlabeled samples in the second dataset for the second classification task; and

(vii) performing steps of training the fuzzy deep learning architecture till finetuning for the remaining set of multi-sliced and multi-modal unlabeled samples in the second dataset for the second classification task.

System **100**

**108**

Memory **102**

Modules **102a**

Repository **102b**

I/O interface(s) **106**

Hardware processor(s) **104**

**FIG. 1**

**Receiving,** a first dataset and a second dataset comprising a plurality of three-dimensional images, wherein the plurality of three-dimensional images comprise a plurality of slices and a plurality of modalities, and wherein the first dataset comprises a set of labeled multi-sliced and multi-modal samples of plurality of three-dimensional images related to a first classification task and the second dataset comprises (i) a set of labeled multi-sliced and multi-modal samples and (ii) a set of unlabeled multi-sliced and multi-modal samples related to a second classification task

202

**Inputting,** the first dataset to fuzzy deep learning architecture which is pretrained using the first dataset for the first classification task, wherein the fuzzy deep learning architecture comprises (i) a backbone comprising a plurality of convolutional blocks and (ii) a plurality of fuzzy layers, and (iii) a classification head comprising a plurality of average pooling layers followed by a plurality of fully connected layers and a plurality of max-pool layers, and wherein each of the plurality of fuzzy layers comprises an ordered weighted averaging (OWA) layer, a sorting function, and a weighted aggregation layer

204

A

**FIG. 2A**

(A)

Iteratively performing a plurality of steps until a stopping criterion is satisfied, the plurality of steps comprising: training, the fuzzy deep learning architecture using the set of multi-sliced and multi-modal labeled samples in the second dataset; generating, a plurality of pseudo-labels for the set of multi-sliced and multi-modal unlabeled samples in the second dataset for the second classification task; filtering an optimum fraction of the set of unlabeled samples of the plurality of three-dimensional images in the second dataset for the second classification task based on a model confidence for the generated plurality of pseudo-labels; augmenting the optimum fraction of the set of unlabeled samples of the plurality of three-dimensional images in the second dataset for the second classification task with corresponding pseudo-labels from the plurality of pseudo-labels; fine tuning the fuzzy deep learning architecture using (a) the set of labeled multi-sliced and multi-modal samples of the plurality of three-dimensional images in the second dataset and (b) the optimum fraction of the set of multi-sliced and multi-modal unlabeled samples of the plurality of three-dimensional images in the second dataset for the second classification task augmented with corresponding pseudo-labels from the plurality of pseudo-labels; generating, a plurality of pseudo-labels for a remaining set of multi-sliced and multi-modal unlabeled samples in the second dataset for the second classification task; and performing steps of training the fuzzy deep learning architecture till finetuning for the remaining set of multi-sliced and multi-modal unlabeled samples in the second dataset for the second classification task

↗206

200 ↗

**FIG. 2B**

FIG. 3

EP 4 390 763 A1

**FIG. 4**

23

Stage 0

At stage 1:

$$D_{finetune} = D_{target}^L$$

$$D'_{finetune} = D_{target}^U$$

At stage k:

$$D_{finetune} = D_{finetune} \cup$$

$$\left(top\ p\%\ of\ D'_{finetune}\right)$$

$$D'_{finetune} = (100 - p)\%\ of\ D'_{finetune}$$

$D_{source}$ | Training for task $d_1$ | M

Stage k

$D_{finetune}$ | Training for task $d_2$ | M

$D'_{finetune}$ | Testing for task $d_2$ | M | Pseudo-label Generation | Select top p% samples based on model confidence

**FIG. 5**

**FIG. 6A**

**FIG. 6B**

**FIG. 6C**

**FIG. 6D**

**FIG. 6E**

**FIG. 6F**

**FIG. 6G**

**FIG. 6H**

**FIG. 6I**

**FIG. 7A**

**FIG. 7B**

**FIG. 7C**

**FIG. 7D**

**FIG. 7E**

**FIG. 7F**

FIG. 7G

FIG. 7H

**FIG. 7I**

**FIG. 7J**

FIG. 7K

FIG. 7L

**FIG. 8A**

**FIG. 8B**

**FIG. 8C**

**FIG. 8D**

**FIG. 8E**

**FIG. 8F**

**FIG. 8G**

**FIG. 8H**

**FIG. 8I**

**FIG. 8J**

**FIG. 8K**

**FIG. 8L**

**FIG. 9A**

**FIG. 9B**

**FIG. 9C**

**FIG. 9D**

**FIG. 9E**

**FIG. 9F**

ACL_Meniscus_Coronal_25%

**FIG. 9G**

| | |
|---|---|
| ─●─ | Fuzzy1D |
| ─✳─ | Fuzzy2D |
| ⋯■⋯ | NonFuzzy |
| ─✦─ | Fuzzy1D(LB) |
| ─◆─ | Fuzzy2D(LB) |
| ⋯●⋯ | NonFuzzy(LB) |
| ⋯▲⋯ | Fuzzy1D(UB) |
| ⋯✱⋯ | Fuzzy2D(UB) |
| ⋯✳⋯ | NonFuzzy(UB) |

ACL_Meniscus_Coronal_50%

**FIG. 9H**

**FIG. 9I**

**FIG. 9J**

**FIG. 9K**

**FIG. 9L**

Europäisches
Patentamt

European
Patent Office

Office européen
des brevets

# EUROPEAN SEARCH REPORT

**Application Number**

EP 23 21 2566

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y,D | BIEN NICHOLAS ET AL: "Deep-learning-assisted diagnosis for knee magnetic resonance imaging: Development and retrospective validation of MRNet", PLOS MEDICINE, vol. 15, no. 11, 27 November 2018 (2018-11-27), page e1002699, XP055794735, DOI: 10.1371/journal.pmed.1002699 * the whole document * ----- | 1-14 | INV.<br>G06N3/043<br>G06N3/096<br>G06N3/045<br>G06N3/0464<br>G06N3/048<br>G06N3/0895<br>G06N3/09<br>G06V10/44<br>G06V10/764<br>G06V10/82 |
| Y | YANG LI: "Semi-supervised few-shot learning approach for plant diseases recognition", PLANT METHODS, vol. 17, no. 1, 1 December 2021 (2021-12-01), XP093153205, GB ISSN: 1746-4811, DOI: 10.1186/s13007-021-00770-1 * page 2; pages 3-6, section entitled "Methods"; figure 6 * ----- | 1-14 | |
| A,D | DOMINGUEZ-CATENA I ET AL: "Additional Feature Layers from Ordered Aggregations for Deep Neural Networks", 2020 IEEE INTERNATIONAL CONFERENCE ON FUZZY SYSTEMS (FUZZ-IEEE), IEEE, 19 July 2020 (2020-07-19), pages 1-8, XP033814856, DOI: 10.1109/FUZZ48607.2020.9177555 [retrieved on 2020-08-25] * the whole document * ----- | 1-14 | **TECHNICAL FIELDS SEARCHED (IPC)**<br><br>G06N<br>G06V |

-/--

The present search report has been drawn up for all claims

| Place of search | Date of completion of the search | Examiner |
|---|---|---|
| The Hague | 7 May 2024 | Keane, Shane |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

| Europäisches Patentamt European Patent Office Office européen des brevets | **EUROPEAN SEARCH REPORT** | **Application Number** EP 23 21 2566 |
|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | Alex Krizhevsky ET AL: "ImageNet Classification with Deep Convolutional Neural Networks", Advances in Neural Information Processing Systems 25, 1 January 2012 (2012-01-01), pages 1097-1105, XP055309176, Lake Tahoe, Nevada Retrieved from the Internet: URL:https://papers.nips.cc/paper/4824-imag enet-classification-with-deep-convolutiona l-neural-networks.pdf [retrieved on 2016-10-10] * figure 2 * ----- | 2,9 | |
| A | JIANHONG CHENG: "A Fully Automated Multimodal MRI-Based Multi-Task Learning for Glioma Segmentation and IDH Genotyping", IEEE TRANSACTIONS ON MEDICAL IMAGING, vol. 41, no. 6, 1 June 2022 (2022-06-01), pages 1520-1532, XP093153223, USA ISSN: 0278-0062, DOI: 10.1109/TMI.2022.3142321 Retrieved from the Internet: URL:https://ieeexplore.ieee.org/stampPDF/g etPDF.jsp?tp=&arnumber=9678965&ref=aHR0cHM 6Ly9pZWVleHBsb3JlLmllZWUub3JnL2RvY3VtZW50L zk2Nzg5NjU=> * figure 1; section IV * ----- | 1-14 | TECHNICAL FIELDS SEARCHED (IPC) |

The present search report has been drawn up for all claims

| Place of search | Date of completion of the search | Examiner |
|---|---|---|
| The Hague | 7 May 2024 | Keane, Shane |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

**EP 4 390 763 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- IN 202221070260

### Non-patent literature cited in the description

- **NICHOLAS BIEN, ; PRANAV RAJPURKAR ; ROBYN L BALL, ; JEREMY IRVIN, ; ALLISON PARK, ; ERIK JONES, ; MICHAEL BEREKET, ; BHAVIK N PATEL ; KRISTEN W YEOM ; KATIE SHPANSKAYA et al.** Deep-learning assisted diagnosis for knee magnetic resonance imaging: development and retrospective validation of MRNet. *PLoS medicine,* 2018, vol. 15 (11), e1002699
- Introducing fuzzy layers for deep learning. **STANTON R PRICE ; STEVEN R PRICE, ; DEREK T ANDERSON.** 2019 IEEE International Conference on Fuzzy Systems (FUZZ-IEEE). IEEE, 2019, vol. 1-6
- Optimization as a model for few-shot learning. **SACHIN RAVI ; HUGO LAROCHELLE.** International conference on learning representations. 2017

- **RONALD R YAGER.** On ordered weighted averaging aggregation operators in multicriteria decisionmaking. *IEEE Transactions on systems, Man, and Cybernetics,* 1988, vol. 18 (1), 183-190
- **RONALD R YAGER.** On ordered weighted averaging aggregation operators in multicriteria decisionmaking. *IEEE Transactions on systems, Man, and Cybernetics,* 1988, vol. 18 (1), 183-190
- **RONALD R YAGER.** Families of OWA operators. *Fuzzy sets and systems,* 1993, vol. 59 (2), 125-148
- Additional feature layers from ordered aggregations for deep neural networks. **DANIEL PATERNAIN ; MIKEL GALAR.** 2020 IEEE International Conference on Fuzzy Systems (FUZZ-IEEE). IEEE, 2020, vol. 1-8